# EUROPÄISCHE PATENTSCHRIFT

(11) **EP 1 088 007 B1**
(45) Veröffentlichungstag und Bekanntmachung des Hinweises auf die Patenterteilung: **26.02.2003**
(21) Anmeldenummer: 99920845.7
(22) Anmeldetag: 04.05.1999
(51) Int. Cl.: C08F 8/00, H01M 10/40

(54) **FÜR ELEKTROCHEMISCHE ZELLEN GEEIGNETE ZUSAMMENSETZUNGEN**
COMPOSITIONS SUITABLE FOR ELECTROCHEMICAL CELLS
COMPOSITIONS APPROPRIEES A DES CELLULES ELECTROCHIMIQUES

(30) Priorität: 04.05.1998 DE 19819752
(43) Veröffentlichungstag der Anmeldung: 04.04.2001
(73) Patentinhaber: BASF AKTIENGESELLSCHAFT, 67056 Ludwigshafen (DE)
(72) Erfinder: MÖHWALD, Helmut, D-76855 Annweiler (DE); DÖTTER, Gerhard, D-67067 Ludwigshafen (DE); BLUM, Rainer, D-67069 Ludwigshafen (DE); KELLER, Peter, D-66583 Spiesen-Elversberg (DE); BAUER, Stephan, D-67126 Hochdorf-Assenheim (DE); BRONSTERT, Bernd, D-67166 Otterstadt (DE)
(74) Vertreter: Isenbruck, Günter, Dr.
(86) Internationale Anmeldenummer: EP9903028
(87) Internationale Veröffentlichungsnummer: WO99057161

(56) Entgegenhaltungen:
- EP-A- 0 377 199
- EP-A- 0 395 990
- EP-A- 0 526 399
- EP-A- 0 666 607
- DE-A- 4 433 290
- DE-A- 19 612 769
- DE-A- 19 653 631
- US-A- 4 241 149
- US-A- 5 098 973
- US-A- 5 558 911
- G. EISELE: "Mécanisme de photoréticulation de polymères contenant le motif dicyclopentadiène en présence et en absence de benzophénone." MACROMOL. CHEM. PHYS., Bd. 197, Mai 1996 (1996-05), Seiten 1731-1756, XP000630364

## Beschreibung

Die vorliegende Erfindung betrifft Zusammensetzungen, die u.a. für elektrochemische Zellen mit Lithiumionen-haltigen Elektrolyten geeignet sind; deren Verwendung z.B. in bzw. als Festelektrolyten, Separatoren und Elektroden; Festelektrolyte, Separatoren, Elektroden, Sensoren, elektrochrome Fenster, Displays, Kondensatoren und ionenleitende Folien, die eine solche Zusammensetzung enthalten, sowie elektrochemische Zellen mit solchen Festelektrolyten, Separatoren und/oder Elektroden.

Elektrochemische, insbesondere wiederaufladbare Zellen sind allgemein bekannt, beispielsweise aus "Ullmann's Encyclopedia of Industrial Chemistry", 5. Ed., Vol A3, VCH Verlagsgesellschaft mbH, Weinheim, 1985, Seite 343-397.

Unter diesen Zellen nehmen die Lithiumbatterien und die Lithiumionenbatterien insbesondere als Sekundärzellen aufgrund ihrer hohen spezifischen Energiespeicherdichte eine besondere Stellung ein.

Solche Zellen enthalten in der Kathode, wie u.a. in obigem Zitat aus "Ullmann" beschrieben, lithiierte Mangan-, Cobalt-, Vanadium- oder Nickel-Mischoxide, wie sie im stöchiometrisch einfachsten Fall als LiMn₂O₄, LiCoO₂, LiV₂O₅ oder LiNiO₂ beschrieben werden können.

Mit Verbindungen, die Lithiumionen in ihr Gitter einbauen können, wie z.B. Graphit, reagieren diese Mischoxide reversibel unter Ausbau der Lithiumionen aus dem Kristallgitter, wobei in diesem die Metallionen wie Mangan-, Cobalt- oder Nickelionen oxidiert werden. Diese Reaktion läßt sich in einer elektrochemischen Zelle zur Stromspeicherung nutzen, indem man die Lithiumionen aufnehmende Verbindung, also das Anodenmaterial, und das lithiumhaltige Mischoxid, also das Kathodenmaterial, durch einen Elektrolyten trennt, durch welchen die Lithiumionen aus dem Mischoxid in das Anodenmaterial wandern (Ladevorgang).

Die zur reversiblen Speicherung von Lithiumionen geeigneten Verbindungen werden dabei üblicherweise auf Ableitelektroden mittels eines Bindemittels fixiert.

Bei der Aufladung der Zelle fließen Elektronen durch eine äußere Spannungsquelle und Lithiumkationen durch den Elektrolyten zum Anodenmaterial. Bei der Nutzung der Zelle fließen die Lithiumkationen durch den Elektrolyten, die Elektronen hingegen durch einen Nutzwiderstand vom Anodenmaterial zum Kathodenmaterial.

Zur Vermeidung eines Kurzschlusses innerhalb der elektrochemischen Zelle befindet sich zwischen den beiden Elektroden eine elektrisch isolierende, für Lithiumkationen aber durchgängige Schicht. Dies kann ein sogenannter Festelektrolyt oder ein gewöhnlicher Separator sein.

Festelektrolyte und Separatoren bestehen bekanntermaßen aus einem Trägermaterial, in das eine dissoziierbare, Lithiumkationen enthaltende Verbindung zur Erhöhung der Lithiumionenleitfähigkeit und üblicherweise weitere Zusatzstoffe wie Lösungsmittel inkorporiert werden.

Als Trägermaterial schlägt z.B. die US-A 5296318 und die US-A 5429891 ein Copolymerisat aus Vinylidenfluorid und Hexafluorpropen vor. Die Verwendung derartiger, hochresistenter (Co)polymere ist jedoch mit einer Reihe von Nachteilen behaftet.

Derartige Polymere sind nicht nur teuer, sondern lassen sich auch nur schlecht in Lösung bringen. Ferner erhöhen sie aufgrund ihrer vergleichsweise geringen Lithiumkationen-Leitfähigkeit den Widerstand der Zelle, so daß man bereits bei der Herstellung der isolierenden Schicht den Elektrolyten, der üblicherweise aus einer Lithiumkationen enthaltenden Verbindung, wie LiPF₆, LiAsF₆ oder LiSbF₆ und einem organischen Lösungsmittel wie Ethylencarbonat oder Propylencarbonat besteht, zuzugeben hat (US-A 5296318, US-A 5429891). Außerdem lassen sich derartige Polymere nur mit z.B. hohen Anteilen von Weichmachern, z.B. Di-n-butylphthalat, und von pyrogenen Kieselsäuren verarbeiten, die zugesetzt werden, um einerseits eine ausreichende Verfilmung und Kohäsion der Elektrolytschicht und die Verklebbarkeit mit den Elektrodenschichten und andererseits eine ausreichende Leitfähigkeit und Permeabilität für Lithiumkationen zugewährleisten. Der Weichmacher muß dann vor Inbetriebnahme der Batterien durch einen im technischen Maßstab überaus schwierigen und teuren Extraktionsschritt quantitativ aus dem Schichtverbund von Anode, Festelektrolyt- oder Separatorschicht und Kathodenschicht entfernt werden.

Die WO97/37397 betrifft u.a. eine Mischung Ia, enthaltend ein Gemisch IIa, bestehend aus
a) 1 bis 95 Gew.-% eines Feststoffs III, vorzugsweise eines basischen Feststoffs III mit einer Primärpartikelgröße von 5 nm bis 20 µm und
b) 5 bis 99 Gew.-% einer polymeren Masse IV, erhältlich durch Polymerisation von
   b1) 5 bis 100 Gew.-% bezogen auf die Masse IV eines Kondensationsprodukts V
      aus
      a) mindestens einer Verbindung VI, die in der Lage ist mit einer Carbonsäure oder einer Sulfonsäure oder einem Derivat oder einem Gemisch aus zwei oder mehr davon zu reagieren, und
      b) mindestens 1 Mol pro Mol der Verbindung VI einer Carbonsäure oder Sulfonsäure VII, die mindestens eine radikalisch polymerisierbare funktionelle Gruppe aufweist, oder eines Derivats davon oder eines Gemischs aus zwei oder mehr davon
      und
   b2) 0 bis 95 Gew.-% bezogen auf die Masse IV einer weiteren Verbindung VIII mit einem mittleren Molekulargewicht (Zahlenmittel) von mindestens 5.000
      mit Polyethersegmenten in Haupt- oder Seitenkette,
wobei der Gewichtsanteil des Gemisches IIa an der Mischung Ia 1 bis 100 Gew.-% beträgt.

Auch die zur gleichen Patentfamilie wie die WO97/37397 gehörende deutsche Patentanmeldung DE 196 12 769 A1 offenbart eine Mischung I, die als Festelektrolyt oder Separator für elektrochemische Zellen mit Lithiuminterkalationsverbindungen geeignet ist. Diese Mischung enthält ein Gemisch II, bestehend aus einem Feststoff III und einer polymeren Masse IV, die zur Vernetzung fähig ist. Die polymere Masse IV wird dabei hergestellt durch Polymerisation eines Esters V auf Basis α,β-ungesättigter Carbonsäuren und gegebenenfalls einer weiteren polymeren Verbindung VIII, die Polyethersegmente enthält.

Obwohl die dort beschriebenen Systeme bereits hervorragende Eigenschaften, insbesondere bei Verwendung in elektrochemischen Zellen, wie z.B. hervorragende Kurzschlußfestigkeit, hohe mechanische Stabilität sowie gute Verarbeitbarkeit aufweisen, ist es bei Verwendung dieser Systeme meist notwendig, die eigentliche Folienherstellung bzw. den Photovernetzungsschritt bei der Herstellung von z.B. Gießfolien unter Inertgasbedingungen durchzuführen.

So ist für das Gelingen der Vernetzungsreaktion der in DE 196 12 769 A1 offenbarten Zusammensetzungen gemäß der Beispiele 1 bis 4 die Anwesenheit eines Schutzgases erforderlich. In Beispiel 1 wird Argon verwendet, in Beispiel 2 bis 4 Stickstoff.

Demgemäß lag der vorliegenen Erfindung die Aufgabe zugrunde, ein weiter verbessertes System fiir die Verwendung in elektrochemischen Zellen bereitzustellen. Insbesondere lag der vorliegenden Erfindung die Aufgabe zugrunde, eine Zusammensetzung bereitzustellen, die besser, d.h. unter Vermeidung von Inertgasbedingungen verarbeitet werden kann.

Somit betrifft die vorliegende Erfindung eine Zusammensetzung enthaltend:
(a) 1 bis 99 Gew.- % eines Pigments (I) mit einer Primärpartikelgröße von 5 nm bis 100 µm, das ein Feststoff Ia oder eine als Kathodenmaterial in elektrochemischen Zellen wirkende Verbindung Ib oder eine als Anodenmaterial in elektrochemische Zellen wirkende Verbindung Ic oder ein Gemisch des Feststoffs Ia mit der Verbindung Ib oder der Verbindung Ic ist,
(b) 1 bis 99 Gew.- % eines polymeren Materials (II), das umfaßt:
   (IIa) 1 bis 100 Gew.-% eines Polymers oder Copolymers (IIa), das ketten-, end- und/oder seitenständig Reaktivgruppen (RG) aufweist, die thermisch und/oder unter UV-Strahlung zu Vernetzungsreaktionen fähig sind, und
   (IIb) 0 bis 99 Gew.-% mindestens eines Polymers oder Copolymers (IIb), das frei ist von Reaktivgruppen RG,
wobei das Polymer IIa ketten-, end- und/oder seitenständig mindestens eine Reaktivgruppe RGa aufweist, die thermisch und/oder unter UV-Strahlung im Triplett angeregten Zustand zur Wasserstoffabstraktion befähigt ist, und ketten-, end- und/oder seitenständig mindestens eine von RGa verschiedene, mit RGa coreaktive Gruppe RGb aufweist, wobei im Durchschnitt aller Polymermoleküle mindestens je eine Gruppe RGa und eine Gruppe RGb vorhanden ist.

Insbesondere ist diese Zusammensetzung durch das neuartige Vernetzersystem (Polymer IIa) gekennzeichnet.

Das Pigment I kann ein Feststoff Ia sein. Die Feststoffe sollten vorteilhaft in der als Elektrolyt verwendeten Flüssigkeit weitestgehend unlöslich sowie in dem Batteriemedium elektrochemisch inert sein. Der Begriff "Feststoff" umfaßt alle unter Normalbedingungen als Feststoff vorliegenden Verbindungen, die bei Betrieb der Batterie unter den beim Laden von Batterien, insbesondere Lithiumbatterien, herrschenden Bedingungen weder Elektronen aufnehmen noch diese abgeben. Vorzugsweise handelt es sich dabei um einen Feststoff, der ausgewählt wird aus der Gruppe bestehend aus einem anorganischen Feststoff, vorzugsweise einem anorganischen basischen Feststoff, ausgewählt aus der Gruppe bestehend aus Oxiden, Mischoxiden, Carbonaten, Silicaten, Sulfaten, Phosphaten, Amiden, Imiden, Nitriden und Carbiden der Elemente der I., II., III. oder IV. Hauptgruppe oder der IV. Nebengruppe des Periodensystems; einem Polymer, ausgewählt aus der Gruppe bestehend aus Polyethylen, Polypropylen, Polystyrol, Polytetrafluorethylen, Polyvinylidenfluorid, Polyamiden, Polyimiden; einer Feststoffdispersion enthaltend ein derartiges Polymer; Glasmehl, Nanoglaspartikel, wie z.B. Monosper® (Fa. Merck), Mikroglaspartikel, wie z.B. Spheriglas® (Fa. Potters-Ballotini), Nanowhisker und einem Gemisch aus zwei oder mehr davon, wobei eine Zusammensetzung erhalten wird, die als Festelektrolyt und/oder Separator verwendet werden kann.

Beispielhaft zu nennen sind insbesondere: Oxide, wie z.B. Siliciumdioxid, Aluminiumoxid, Magnesiumoxid oder Titandioxid, Mischoxide, beispielsweise der

Elemente Silicium, Calcium, Aluminium, Magnesium, Titan; Silicate, wie z.B. Leiter-, Ketten-, Schicht- und Gerüstsilicate, wie z.B. Talk, Pyrophyllit, Muskovit, Phlogopit, Amphibole, Nesosilicate, Pyroxene, Sorosilicate, Zeolithe, Feldspäte, Wollastonit, insbesondere hydrophobierter Wollastonit, Glimmer, Phyllosilicate; Sulfate, wie z.B. Alkali- und Erdalkalimetallsulfate; Carbonate, beispielsweise Alkali- und Erdalkalimetallcarbonate, wie z.B. Calcium-, Magnesium oder Bariumcarbonat oder Lithium-, Kalium oder Natriumcarbonat; Phosphate, beispielsweise Apatite; Amide; Imide; Nitride; Carbide; Polymere, wie z.B. Polyethylen, Polypropylen, Polystyrol, Polytetrafluorethylen, Polyvinylidenfluorid, Polyamide, Polyimide, oder andere Thermoplasten, Duromeren oder Mikrogele, vernetzte Polymerpartikel, wie z.B. Agfaperl®, Feststoffdispersionen, insbesondere solche, die die oben genannten Polymere enthalten, sowie Gemische aus zwei oder mehr der oben genannten Feststoffe.

Weiterhin können als inerter Feststoff Ia erfindungsgemäß anorganische Li-Ionen leitende Feststoffe, vorzugsweise ein anorganischer basischer Li-Ionen leitender Feststoff eingesetzt werden.

Dabei sind zu nennen: Lithiumborate, wie z.B. Li₄B₆O₁₁ * xH₂O, Li₃(BO₂)₃, Li₂B₄O₇ * xH₂O, LiBO₂, wobei x eine Zahl von 0 bis 20 sein kann; Lithium-Aluminate, wie z.B. Li₂O * Al₂O₃ * H₂O, Li₂Al₂O₄, LiAlO₂; Lithium-Aluminosilicate, wie z.B. Lithium enthaltende Zeolithe, Feldspäte, Feldspatvertreter, Phyllo- und Inosilicate, und insbesondere LiAlSi₂O₆ (Spodumen), LiAlSi₄O₁₀ (Petullit), LiAlSiO₄ (Eukryptit), Glimmer, wie z.B. K[Li,Al]₃[AlSi]₄O₁₀(F-OH)₂, K[Li,Al,Fe]₃ [AlSi]₄O₁₀(F-OH)₂; Lithium-Zeolithe, insbesondere solche in Faser-, Blatt-, oder Würfel-Form, insbesondere solche mit der allgemeinen Formel Li_{2/z}O * Al₂O₃ * xSiO₂ * yH₂O wobei z der Wertigkeit entspricht, x 1,8 bis ca. 12 und y 0 bis ca. 8 ist; Lithium-Carbide, wie z.B. Li₂C₂, Li₄C; Li₃N; Lithium-Oxide und -Mischoxide, wie z.B. LiAlO₂, Li₂MnO₃, Li₂O, Li₂O₂, Li₂MnO₄, Li₂TiO₃; Li₂NH; LiNH₂; Lithiumphosphate, wie z.B. Li₃PO₄, LiPO₃, LiAlFPO₄, LiAl(OH)PO₄, LiFePO₄, LiMnPO₄; Li₂CO₃; Lithium-Silicate in Leiter-, Ketten-, Schicht-, und Gerüst-Forrn, wie z.B. Li₂SiO₃, Li₂SiO₄ und Li₆Si₂; Lithium-Sulfate, wie z.B. Li₂SO₄, LiHSO₄, LiKSO₄; sowie die als Verbindung Ib genannten Li-Verbindungen, wobei bei deren Verwendung als Feststoff Ia die Anwesenheit von Leitruß ausgeschlossen ist; sowie Gemische aus zwei oder mehr der oben genannten Li-Ionen leitenden Feststoffe.

Bevorzugt werden als Feststoffe Ia hydrophobierte Feststoffe Ia, weiter bevorzugt hydrophobierte Verbindungen der oben genannten Art verwendet.

Besonders geeignet sind dabei basische Feststoffe. Unter basischen Feststoffen sollen dabei solche verstanden werden, deren Gemisch mit einem flüssigen, Wasser enthaltenden Verdünnungsmittel, das selber einen pH-Wert von höchstens 7 aufweist, einen höheren pH-Wert als dieses Verdünnungsmittel aufweist.

Ferner betrifft sie eine Zusammensetzung, in der das Pigment I eine als Kathodenmaterial in elektrochemischen Zellen wirkende Verbindung Ib ist, die ausgewählt wird aus der Gruppe bestehend aus LiCoO₂, LiNiO₂, LiNiₓCo_{y}O₂, LiNiₓCo_{y}Al_{z}O₂, mit 0<x,y,z≤1, LiₓMnO₂ (0<x≤1), LiₓMn₂O₄ (0<x≤2), LiₓMoO₂ (0<x≤2), LiₓMnO₃ (0<x≤1), LiₓMnO₂ (0<x≤2), LiₓMn₂O₄ (0<x≤2), LiₓV₂O₄ (0<x≤2.5), LiₓV₂O₃ (0<x≤3.5), LiₓVO₂ (0<x≤1), LiₓWO₂ (0<x≤1), LiₓWO₃ (0<x≤1), LiₓTiO₂ (0<x≤1), LiₓTi₂O₄ (0<x≤2), LiₓRuO₂ (0<x≤1), LiₓFe₂O₃ (0<x≤2), LiₓFe₃O₄ (0<x≤2), LiₓCr₂O₃ (0<x≤3), LiₓCr₃O₄ (0<x≤3.8), LiₓV₃S₅ (0<x≤1.8), LiₓTa₂S₂ (0<x≤1), LiₓFeS (0<x≤1), LiₓFeS₂ (0<x≤1), LiₓNbS₂ (0<x≤2.4), LiₓMoS₂ (0<x≤3), LiₓTiS₂ (0<x≤2), LiₓZrS₂ (0<x≤2), LiₓNbSe₂ (0<x≤3), LiₓVSe₂ (0<x≤1), LiₓNiPS₂ (0<x≤1,.5), LiₓFePS₂ (0<x≤1.5), LiNiₓB₁₋ₓO₂ (0<x<1), LiNiₓAl₁₋ₓO₂ (0<x<1), LiNiₓMg₁₋ₓO₂ (0<x<1), LiNiₓCo₁₋ₓVO₄ (1 ≥ x ≥ 0), LiNiₓCo_{y}Mn_{z}O₂ (x+y+z = 1), LiFeO₂, LiCrTiO₄, LiₐM_{b}L_{c}O_{d} (1,15 ≥ a > 0; 1,3≥b+c≥0,8; 2,5≥d≥1,7; M = Ni, Co, Mn; L = Ti, Mn, Cu, Zn, Erdalkalimetalle), LiCu_{X}^{II}Cu_{Y}^{III}Mn₍₂₋ _{(x+y))}O₄ (2>x+y≥0), LiCrTiO₄, LiGaₓMn₂₋ₓO₄ (0,1≥x≥0), Polycarbonsulfide der allgemeinen Struktur: -[C(Sₓ)]ₙ-, V₂O₅, einem Gemisch aus zwei oder mehr davon, und einem Gemisch der Verbindung Ib mit dem Feststoff Ia, und die Zusammensetzung zusätzlich 0,1 bis 20 Gew.-%, bezogen auf die Gesamtmenge der Komponenten I und II, Leitruß enthält, wobei eine Zusammensetzung erhalten wird, die insbesondere als Kathode verwendet werden kann.

Darüber hinaus betrifft sie eine Zusammensetzung, wobei das Pigment I eine als Anodenmaterial in elektrochemischen Zellen wirkende Verbindung Ic ist, die ausgewählt wird aus der Gruppe bestehend aus Lithium, einer Lithium enthaltenden Metallegierung, micronisiertem Kohlenstoffruß, natürlichem und synthetischem Graphit, synthetisch graphitiertem Kohlestaub, einer Kohlefaser, Titanoxid, Zinkoxid, Zinnoxid, Molybdänoxid, Wolframoxid, Titancarbonat, Molybdäncarbonat, Zinkcarbonat, LiₓM_{y}SiO_{z} (1>x≥0,1>y≥0, z>0), Sn₂BPO₄, konjungierten Polymeren wie z.B. Polypyrrole, Polyaniline, Polyacetylene, Polyphenylene, Lithiummetallverbindungen LiₓM, wie z.B. solche mit M = Sn, Bi, Sb, Zn, Cd, Pb und 5≥x≥ 0; Li-Sn-Cd, CdO, PbO, einem Gemisch aus zwei oder mehr davon, und einem Gemisch der Verbindung Ic mit dem Feststoff Ia, und die Zusammensetzung zusätzlich bis zu 20 Gew.-%, bezogen auf die Gesamtmenge der Komponenten I und II, Leitruß enthält, wobei eine Zusammensetzung erhalten wird, die insbesondere als Anode verwendet werden kann.

Besonders geeignet sind Pigmente I, die eine Primärpartikelgröße von 5 nm bis 20 µm, vorzugsweise 0,01 bis 10 µm und insbesondere 0,1 bis 5 µm aufweisen, wobei die angegebenen Partikelgrößen durch Elektronenmikroskopie ermittelt werden. Der Schmelzpunkt der Pigmente liegt vorzugsweise über der für die elektrochemische Zelle üblichen Betriebstemperatur, wobei sich Schmelzpunkte von über 120°C, insbesondere von über 150 °C als besonders günstig erwiesen haben.

Dabei können die Pigmente bzgl. ihrer äußeren Form symmetrisch sein, d.h. ein Größenverhältnis Höhe : Breite : Länge (Aspektverhältnis) von ungefähr 1 aufweisen und als Kugeln, Granalien, annähernd runde Gebilde, aber auch in Form von beliebigen Polyedern, wie z.B. als Quader, Tetraeder, Hexaeder, Octaeder oder als Bipyramide vorliegen, oder verzerrt oder asymmetrisch sein, d.h. ein Größenverhältnis Höhe : Breite : Länge (Aspektverhältnis) von ungleich 1 aufweisen und z.B. als Nadeln, asymmetrische Tetraeder, asymmetrische Bipyramiden, asymmetrische Hexa- oder Octaeder, Plättchen, Scheiben oder als faserförmige Gebilde vorliegen. Sofern die Feststoffe als asymmetrische Teilchen vorliegen, bezieht sich die oben angegebene Obergrenze für die Primärpartikelgröße auf die jeweils kleinste Achse.

Die erfindungsgemäße Zusammensetzung umfaßt 1 bis 95 Gew.-%, vorzugsweise 25 bis 90 Gew.-%, weiter bevorzugt 50 bis 85 Gew.-%, insbesondere 65 bis 80 Gew.-% eines Pigments I, und 5 bis 99 Gew.-%, vorzugsweise 10 bis 75 Gew.-%, weiter bevorzugt 15 bis 50 Gew.-%, insbesondere 20 bis 35 des polymeren Bindemittels II.

Dieses polymere Bindemittel II umfaßt 1 bis 100 Gew.-% mindestens eines Polymers IIa, das
ketten-, end- und/oder seitenständig Reaktivgruppen (RG) aufweist, die thermisch und/oder unter UV-Strahlung zu Vernetzungsreaktionen fähig sind, und 0 bis 99 Gew.-% mindestens eines Polymers oder Copolymers (IIb), das frei ist von Reaktivgruppen RG.

Als Polymere IIa können prinzipiell alle thermisch und/oder unter energiereicher Strahlung, bevorzugt unter UV-Licht vernetzbaren Polymeren verwendet werden, die ketten-, end- und/oder seitenständig Reaktivgruppen (RG), vorzugsweise Reaktivgruppen RGa oder RGb oder RGa und RGb aufweisen, über die, unter Wärmeund/oder Strahlungsaktivierung die Polymeren vemetzen können.

Weiter bevorzugt ist das Polymer IIa ein Polymer, das jeweils ketten-, end- und/oder seitenständig mindestens eine erste Reaktivgruppe RGa und mindestens eine von RGa verschiedene, mit RGa coreaktive Gruppe RGb aufweist, wobei im Durchschnitt aller Polymermoleküle mindestes je eine RGa und eine RGb vorhanden ist.

Weiter kann das Polymer IIa gebildet werden aus einem Gemisch von mehreren Polymeren, von denen ein Teil nur RGa und ein anderer Teil nur RGb aufweist.

Weiter kann das Polymer IIa gebildet werden aus einem Gemisch von mehreren Polymeren, von denen ein Teil nur RGa und ein anderer Teil nur RGb aufweist und weiteren Polymeren, die sowohl RGa und RGb aufweisen.

In der Regel wird das Polymer IIa gebildet aus einer einheitlichen Polymerklasse, bevorzugt aus der Klasse der Polyacrylate. Es sind aber auch Blends verschiedener Polymerklassen möglich

Das Polymer IIa umfaßt sowohl polymere als auch oligomere Stoffe sowie Mischungen aus polymeren und oligomeren Stoffen.

Die oligomere und/oder polymere Grundstruktur der Polymeren IIa umfaßt bekannte Polymeren wie sie z.B. aufgebaut werden durch -C-C-Verknüpfungen, die auch Doppelund/oder Dreifachbindungen aufweisen können, sowie durch Ether-, Ester-, Urethan-, Amid-, Imid-, Imidazol-, Keton-, Sulfid-, Sulfon-, Acetal-, Harnstoff-, Carbonat- und Siloxanverknüpfungen.

Des weiteren kann die oligomere oder polymere Grundstruktur linear, verzweigtkettig, ringförmig oder dentrimer aufgebaut sein.

Die erfindungsgemäß verwendeten Polymere IIa können erhalten werden durch Polymerisation, Polyaddition oder Polykondensation von Monomerbausteinen, die neben den Gruppen über die der Polymeraufbau erfolgt, noch RGa und/oder RGb aufweisen, sodaß erfindungsgemäß funktionalisierte Polymere IIa schon bei der Polymerherstellung gebildet werden.

Weiter können die erfindungsgemäßen Polymeren IIa erhalten werden durch polymeranaloge Umsetzung von funktionellen Polymeren, mit Verbindungen die RGa und/oder RGb und mindestens eine weitere Gruppe aufweisen, die mit den funktionellen Gruppen der oligomeren oder polymeren Grundstruktur reagieren können.

Weiter ist es möglich, eine der funktionellen Gruppen RGa und/oder RGb schon bei der Polymerherstellung einzubauen, und dann die andere RG in das fertige Polymer durch polymeranaloge Funktionalisierung einzuführen.

Gruppen RGa sind Gruppen die Strukturen aufweisen, die unter energiereicher Strahlung, bevorzugt UV-Licht im triplettangeregten Zustand zur Wasserstoffabstraktion befähigt sind (literaturbekannte Fotoinitiatorgruppen vom Norrish II-Typ). Solche Strukturen sind aus der Fotochemie dem Fachmann bekannt. Weiterhin werden hier die entsprechenden Acrylat(derivat)-Verbindungen, die derartige Strukturen aufweisen, aufgelistet. Weitere Details bzgl. dieser Verbindungen sind der US 5 558 911 zu entnehmen, deren diesbezüglicher Inhalt vollumfänglich durch Bezugnahme in den Kontext dieser Anmeldung aufgenommen wird. Selbstverständlich können auch andere Monomere, Oligomere oder Polymere, die derartige Strukturen RGa aufweisen, erfindungsgemäß eingesetzt werden. 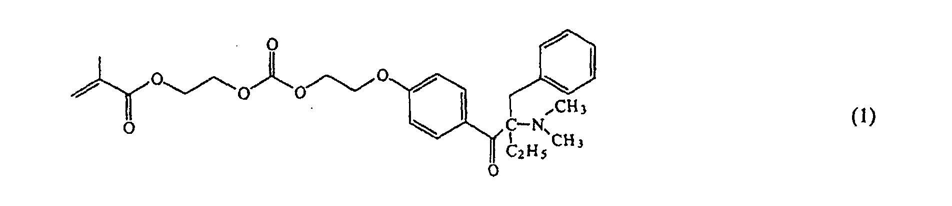 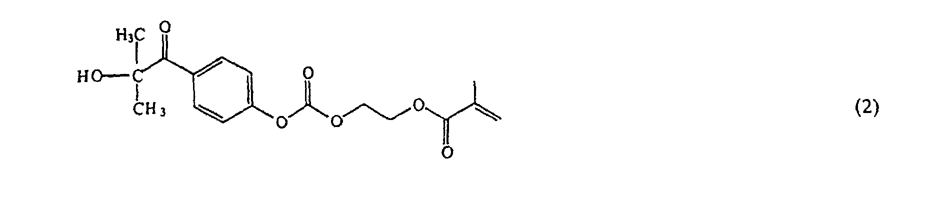 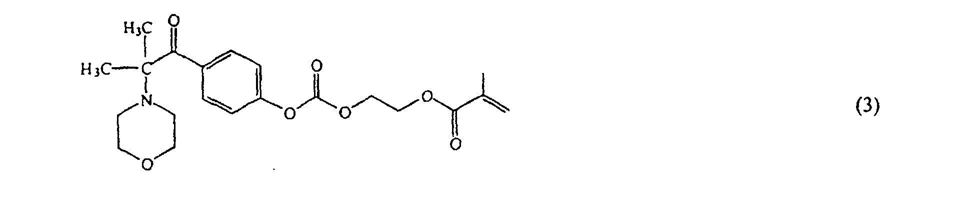 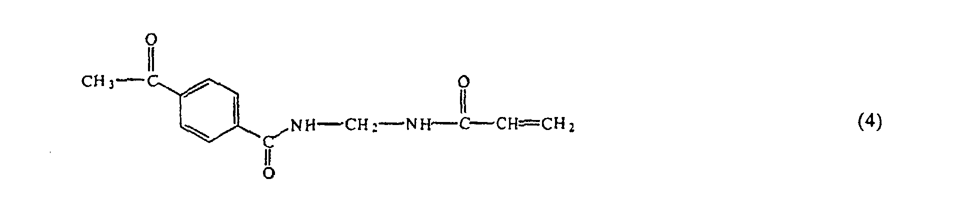 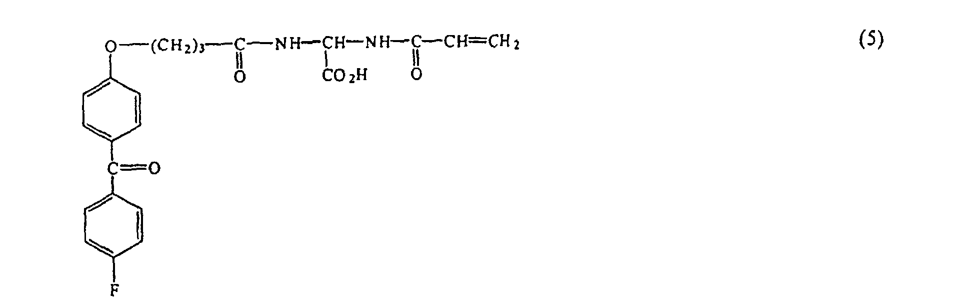 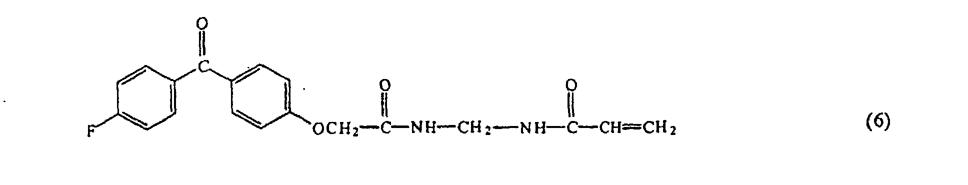 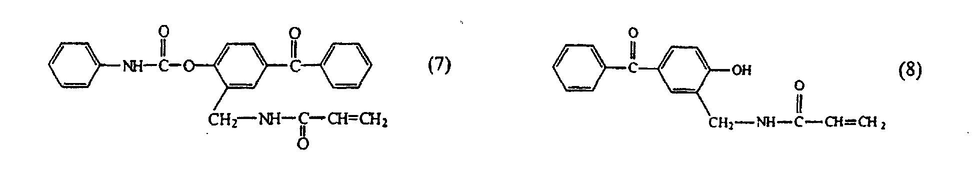 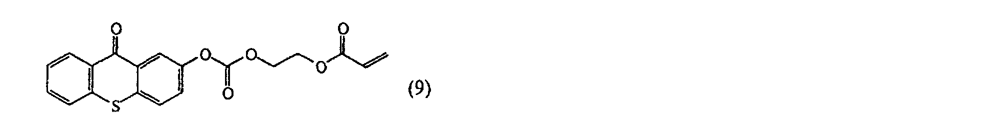 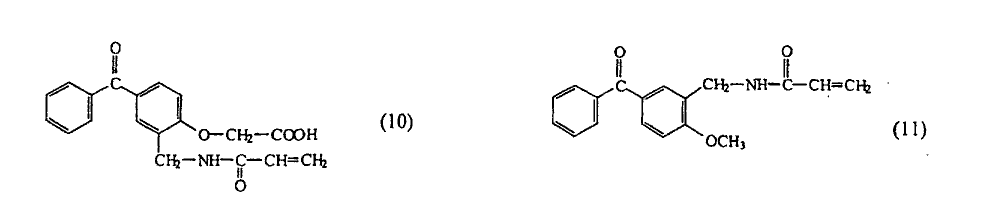 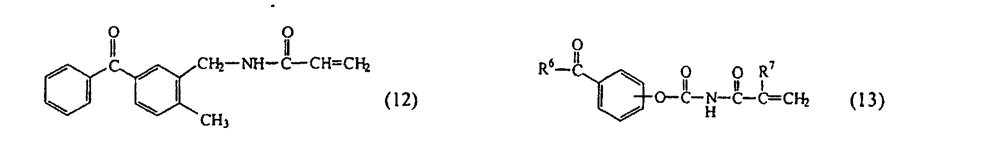 worin
- R⁶: ―CH₃ oder ―C₆H₅ ist
- R⁷: ―H oder ―CH₃ ist 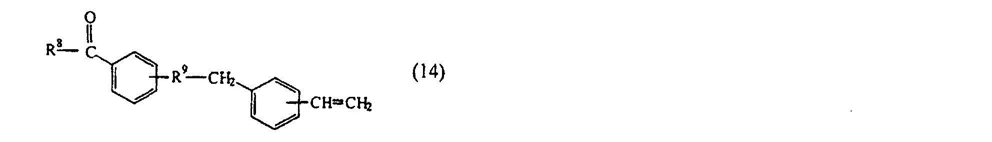
worin
- R⁸: ―CₙC₂ₙ₊₁ ist, wobei n = 1 bis 3 oder ―C₆H₅.
- R9: ―O―, 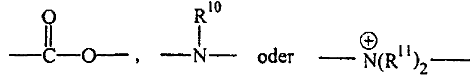 ist,
- R¹⁰: ―H oder ―CₙH₂ₙ₋₁ ist, wobei n = 1 bis 8, und
- R¹¹: ―CₙH₂ₙ₋₁ ist, wobei n = 1 bis 4 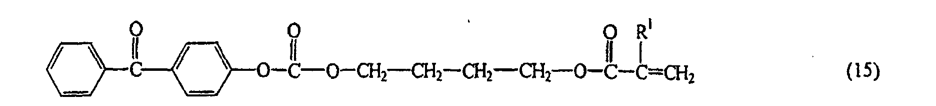 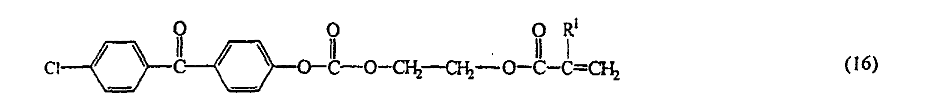 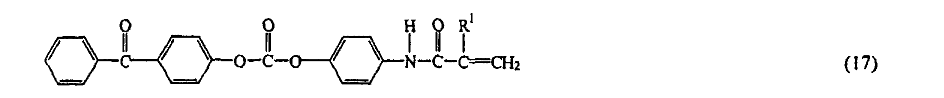 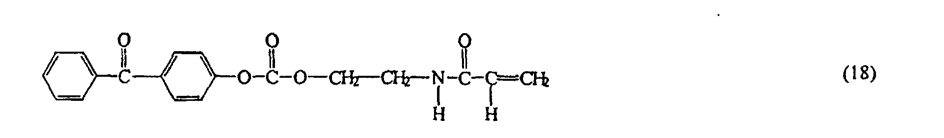 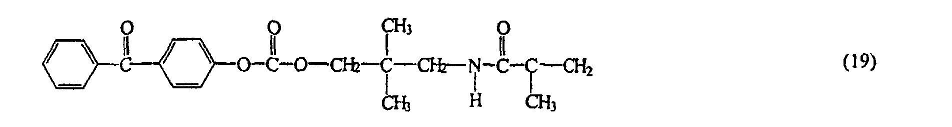 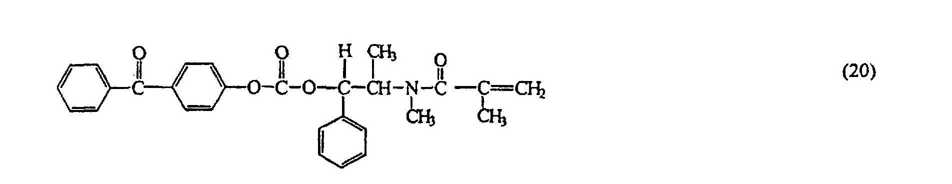 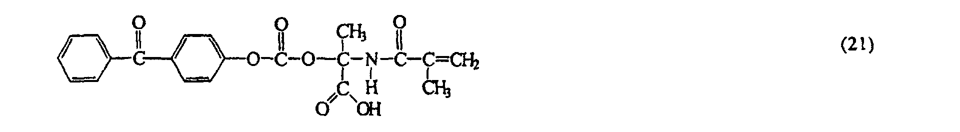 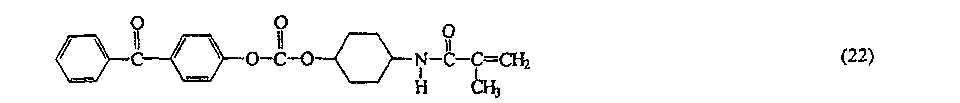 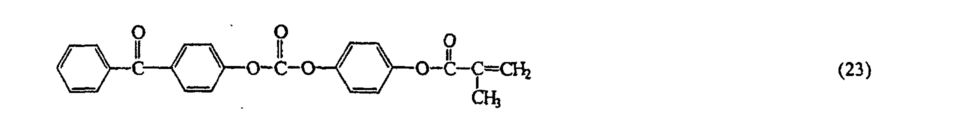 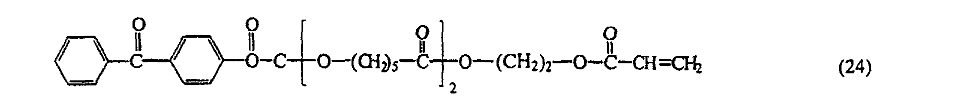 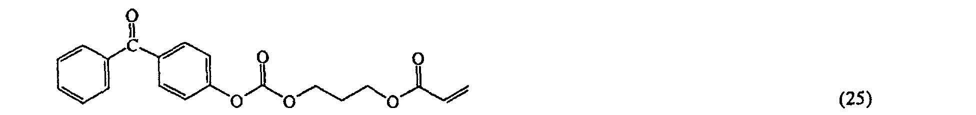 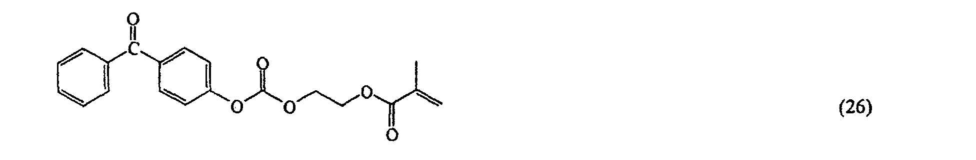 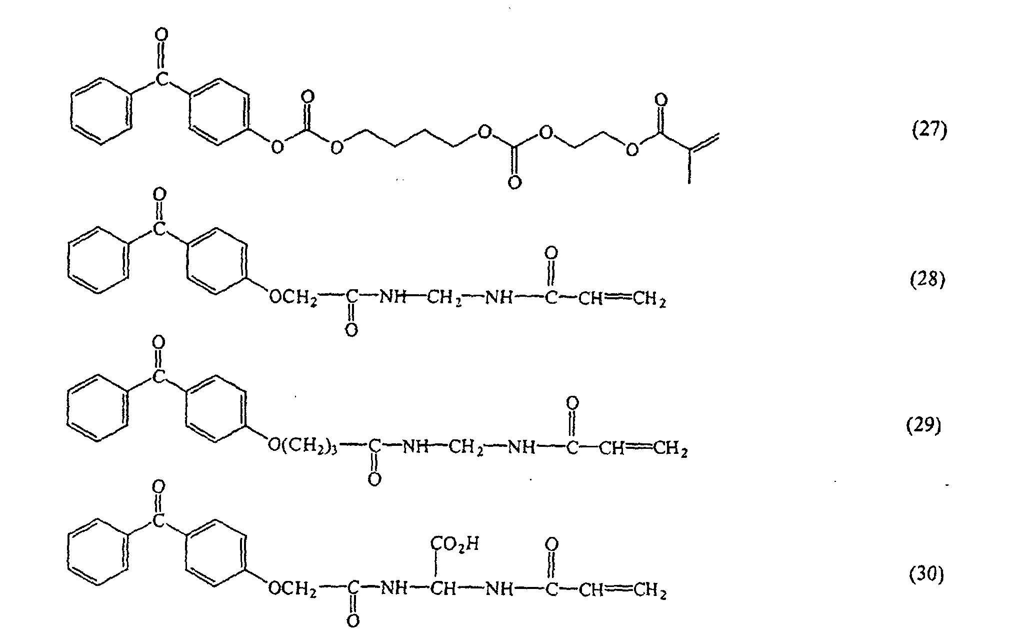 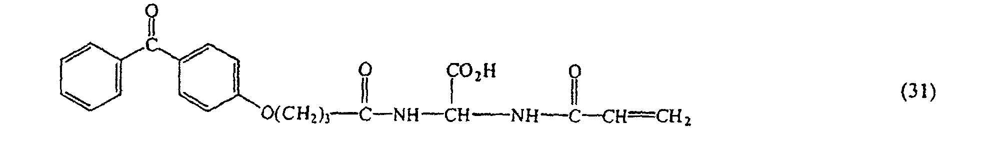 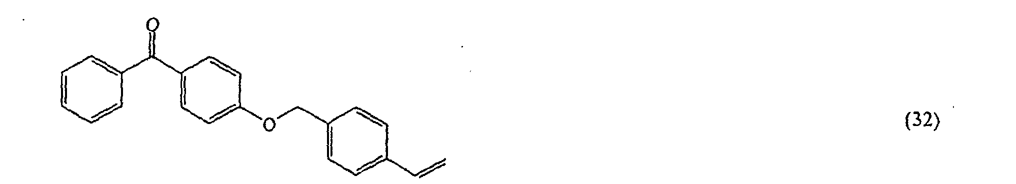 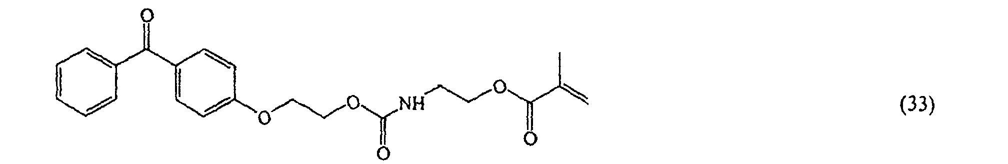 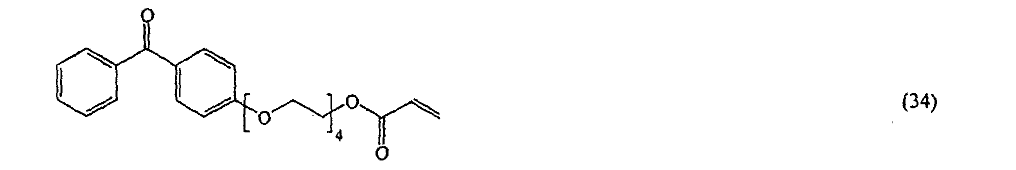 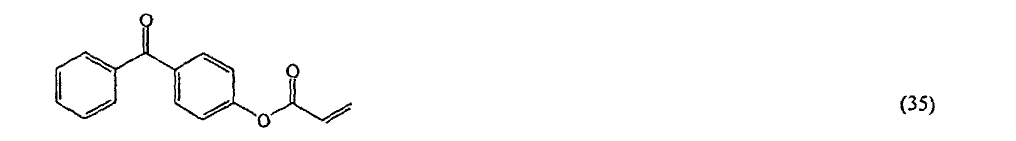 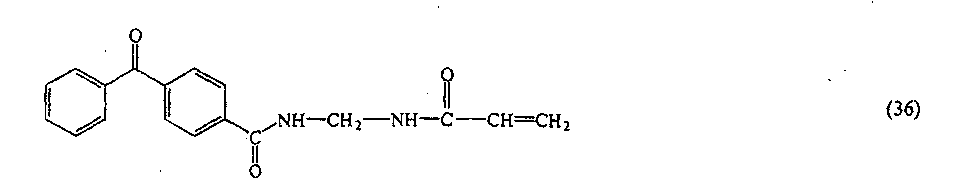 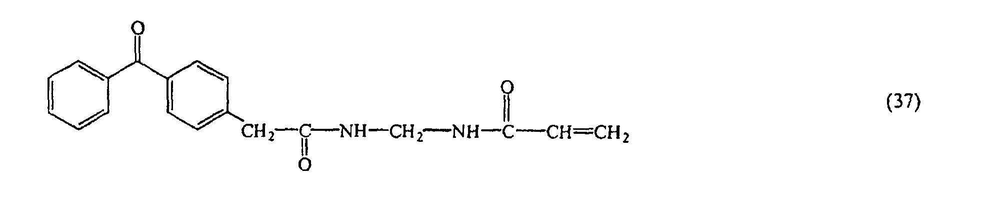 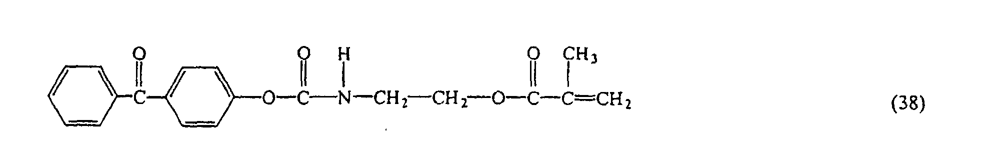 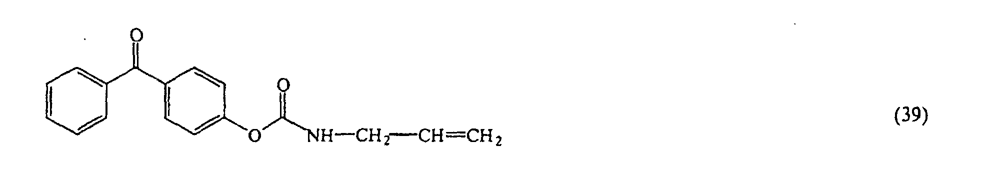 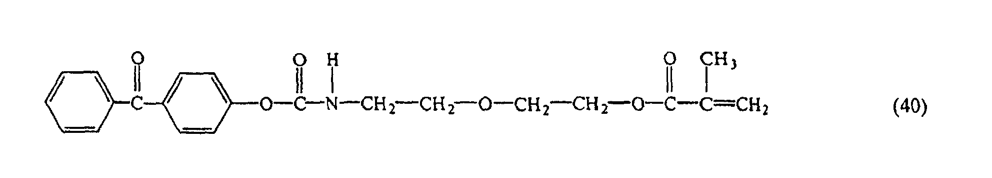 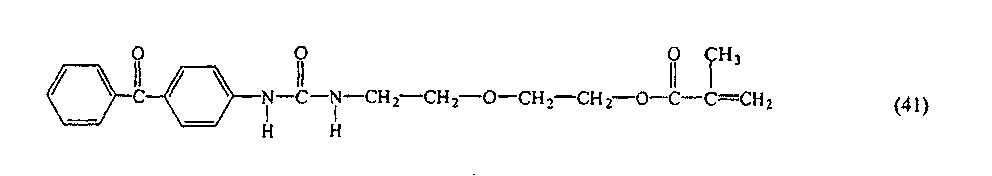
wobei R¹ = H oder CH₃.

Über die Mitverwendung solcher RGa-Acrylate ist es z.B. sehr einfach möglich, durch Copolymerisation mit weiteren Acrylaten, Acrylatcopolymerisate zu erhalten, die mit RGa in erfindungsgemäßer Weise funktionalisiert sind.

Weiter können Grundpolymerisate mit z.B. Aminogruppen, aber ohne Gruppen RGa über eine Michael-Addition solcher RGa-Acrylate leicht mit RGa funktionalisiert werden.

Bevorzugt als RGa sind Benzophenongruppen. Besonders hohe UV-Reaktivität wird bei Polyacrylaten mit Benzophenonabkömmlingen erreicht, bei denen die Benzophenongruppe über eine Spacergruppe an die Polymerhauptkette gebunden ist. Besonders bevorzugte Polyacrylate sind erhältlich durch Copolymerisation mit Acrylaten der Formeln 24 bis 26 und der Formel 34.

Eine weitere kostengünstige und bevorzugte Möglichkeit RGa in Polymere einzuführen ist die Umsetzung von Hydroxybenzophenonen, bevorzugt 4-Hydroxybenzophenon mit den Epoxidgruppen eines Polymers, bevorzugt die Addition von 4-Hydroxybenzophenon an Polyacrylate mit Anteilen an Glycidyl-(meth-)acrylat. Eine weitere elegante Methode ist die Reaktion eines Addukts aus einem Mol Diisocyanat mit einem Mol 4-Hydroxybenzophenon mit einem Polymer, das freie Hydroxylgruppen aufweist.

Eine bevorzugte Methode RGa in Polyester einzuführen besteht in der Mitverwendung von Benzophenoncarbonsäuren bzw. von Benzophenoncarbonsäureanhydriden bei der Polykondensation oder die Umsetzung bzw. Veresterung von Polymeren mit Hydroxylgruppen, Epoxidgruppen, Isocyanatgruppen und/oder Aminogruppen mit Benzophenoncarbonsäuren bzw. Benzophenoncarbonsäureanhydriden.

Gruppen RGb sind Gruppen, die mit angeregten Norrish II-Fotoinitiator-Gruppen wechselwirken können. Als solche Wechselwirkungen ist besonders die Wasserstoffübertragung auf die Norrish II-Struktur dem Fachmann bekannt, sodaß es zur Ausbildung von Radikalen kommt, sowohl beim H-Donor als auch bei der abstrahierenden Norrish II -Struktur. Über eine Radikalkombination ist eine direkte Vernetzung der Polymeren möglich. Weiter ist auch der Start einer radikalisch initiierten Polymerisation von z.B. polymerisierbaren funktionellen Gruppe RGb z.B. Maleinat-, Fumarat-, (Meth)acrylat-, Allyl-, Epoxid-, Alkenyl-, Cycloalkenyl-, Vinylether-, Vinylester-, Vinylaryl- und Cinnamatgruppen durch die fotochemisch erzeugten Radikale möglich.

Bevorzugt sind RGb die als H-Donor mit RGa wechselwirken, d.h. doppelbindungsfreie Systeme. Ein systemimmanenter Vorteil ist dabei die geringe Störempfindlichkeit dieser Systeme, weil sie eine, im Vergleich zu ungesättigten UV-Systemen veringerte Reaktivität gegen die weiteren Bestandteile der Gesamtrezeptur aufweisen. Selbstverständlich ist aber die (Mit-)verwendung ungesättigter Stoffe deshalb nicht ausgeschlossen und im Einzelfall eine Optimierungsaufgabe. H-Donor-Gruppen sind dem Fachmann der Fotochemie bekannt. Es sind prinzipiell Gruppen, die Wasserstoffe mit einer geringen Bindungsenergie aufweisen, besonders Gruppen mit Wasserstoffatomen einer Bindungsenergie von unter 397 kJ/mol.

Angaben zur Bindungsenergie sind literaturbekannt und z.B. zu entnehmen Morrison, Robert Thornton Organic Chemistry, Tabelle : Homolytic Bond Dissociation Energies auf der Innenseite des Umschlags, in Library of Congress Cataloging-in-Publication Data ISBNO-205-08453-2, 1987, by Allyn and Bacon, Inc. A Division of Simon & Schuster, Newton, Massachusets, USA.

Beispiele sind Amin-, Furfuryl-, Tetrahydrofurfuryl-, Isobornyl-, Isoalkylverbindungen und Verbindungen, die Gruppen der folgenden Strukturen aufweisen: 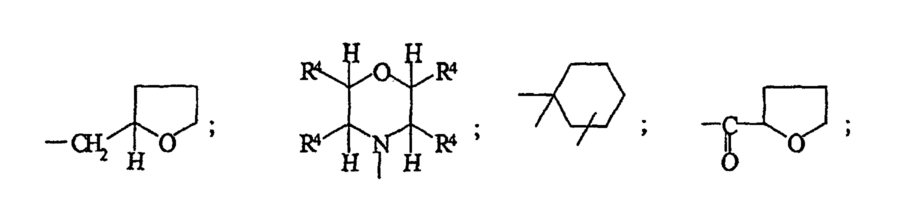 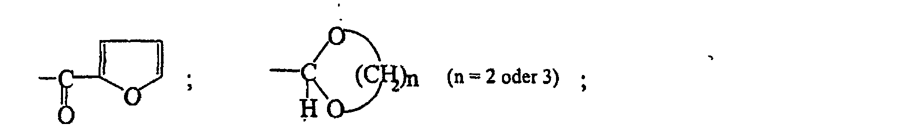 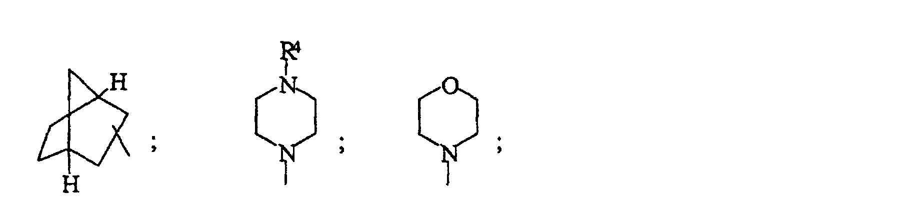 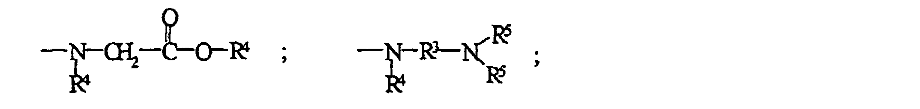 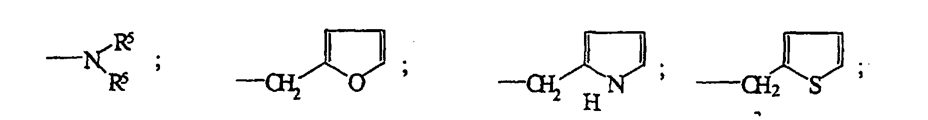 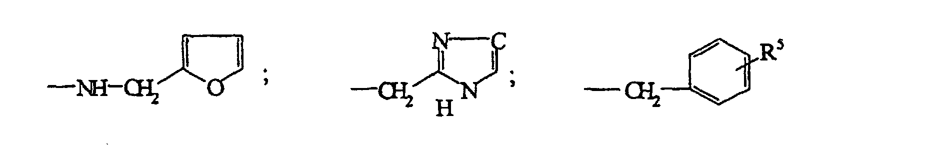 wobei R³ = ein bivalenter aliphatischer, cycloaliphatischer, heterocyclischer oder aromatischer Rest, der gegebenenfalls substituiert ist, oder eine Einfachbindung;
R⁴ = H, geradkettiges oder verzweigtes Alkyl, beispielsweise mit 1 bis 8 Kohlenstoffatomen, halogensubstituiertes Aryl oder Isoamylphenyl;
R⁵ = Alkyl, halogensubstituiertes Alkyl, halogensubstituiertes Aryl oder Isoamylphenyl bedeutet.

Diese Formeln sind beispielhaft und nicht einschränkend.

Bevorzugt sind solche Gruppen die als leicht abstrahierbare H-Atome, H-Atome in α-Stellung zu einer Doppelbindung (allylständige H-Atome) aufweisen. Besonders bevorzugt als RGb sind Gruppen

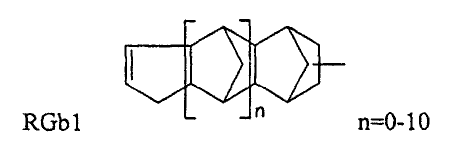

Wege zum Einbau solcher Strukturen sind z.B. die Mitverwendung der Ester des (Oligo-)-dihydrodicyclopentadienols.

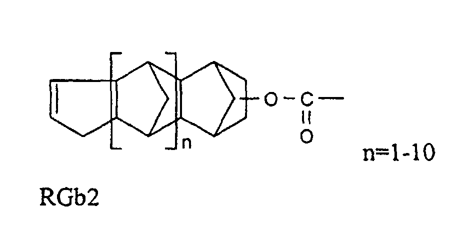

Technisch aus Maleinsäure und DCPD leicht zugänglich sind die Maleinat/Fumarathalbester des (Oligo-)dihydrodicyclopentadienols.

Diese Halbester sind in einer glatten Reaktion aus Maleinsäureanhydrid (MSA), Wasser und Dicyclopentadien (DCPD) bzw. durch eine direkte Addition von DCPD an MSA erhältlich. Weiter ist es möglich, DCPD direkt an andere Säuren und/oder saure Polyester zu addieren. Diese Reaktionen verlaufen aber meist schlechter und bedürfen der Katalyse z.B. mit BF₃-Etherat.

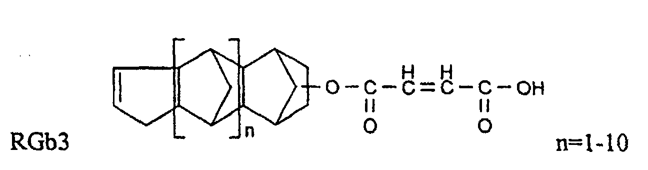

Weiter ist es z.B. aus US-A-252,682 bekannt, daß bei der Reaktion von DCPD und MSA Nebenreaktionen gemäß dem folgenden Formelschema untergeordnet stattfinden können. Diese Nebenprodukte dienen ebenfalls der Einführung von Strukturen gemäß der allgemeinen Formel RGb1.

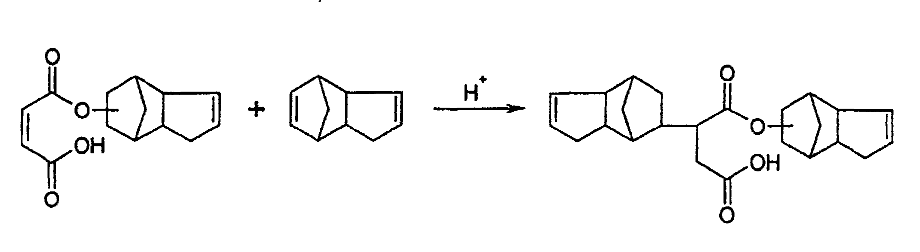

Weiter sind Dihydrodicyclopentadienol und Dihydrodicyclopentadienolacrylat kommerziell verfügbar und zur Einführung der besonders bevorzugten RGb-Strukturen geeignet.

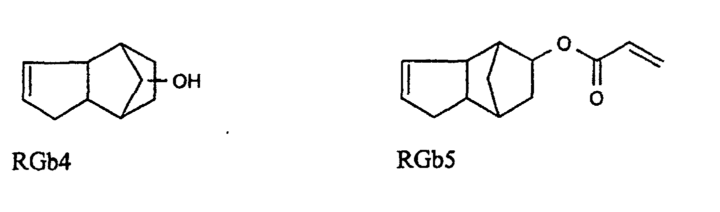

Hydroxyfunktionelle Verbindungen zur Einführung von Gruppen gemäß der allgemeinen Formel RGb1 sind Dihydrodicyclopentadienylalkohol und bevorzugt die kostengünstig unter saurer Katalyse zugänglichen Addukte aus DCPD an Glykole gemäß dem untenstehenden Formelschema

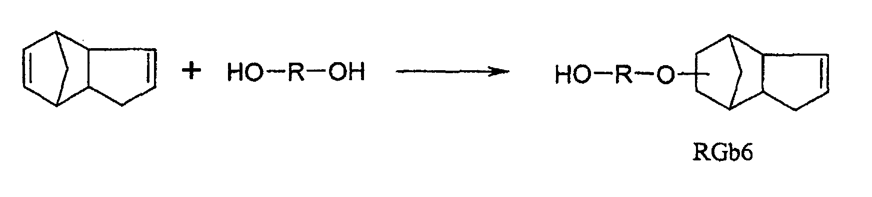

Weiter sind als RGb Endomethylentetrahydrophthalsäurestrukturen von Interesse, die z.B. allgemein durch Anlagerung von CPD an die Maleatgruppen zugänglich sind.

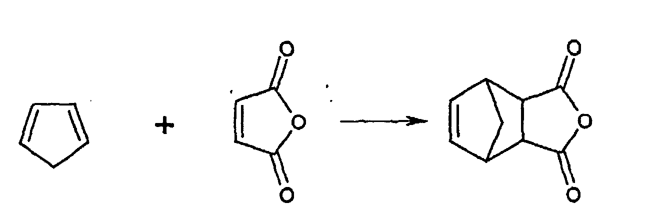

Von besonderem Interesse ist die Einführung von Endomethylentetrahydrophthalsäurestrukturen durch Anlagerung von CPD an die Doppelbindungen ungesättigter Polyester.

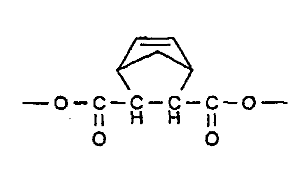

Weiter von Interesse ist die Einführung von Endomethylentetrahydrophthalsäure- und Tetrahydrophthalsäurestrukturen über die Imide dieser Säuren mit Hydroxyalkylaminen wie sie z.B. aus DE-A-15700273 oder DE-A-17200323 bekannt sind.

Die oligomere und/oder polymere Grundstruktur der Polymeren IIa umfaßt die bekannten Polymeren wie sie z.B. aufgebaut werden durch -C-C-Verknüpfungen, die auch Doppel- und/oder Dreifachbindungen aufweisen können, sowie durch Ether-, Ester-, Urethan-, Amid-, Imid-, Imidazol-, Keton-, Sulfid-, Sulfon-, Acetal-, Harnstoff-, Carbonat- und Siloxanverknüpfungen unter der Maßgabe der im Vorstehenden näher definierten Funktionalisierungen.

Bevorzugt werden Polyester, Polyether, Polyurethane und besonders bevorzugt Polyacrylate eingesetzt.

Polyester im Sinne der Erfindung sind gesättigte und ungesättigte Polyesterharze.

Zum Aufbau der Polyesterharze kommen dabei die üblichen und bekannten Carbonsäuren mit ≥ 2 Carboxylgruppen und/oder deren Anhydride und/oder deren Ester und Hydroxylverbindungen mit ≥ 2 OH-Gruppen in Frage. Es können auch monofunktionelle Verbindungen mitverwenden werden, um z.B. das Molekulargewicht der Polykondensate zu regulieren.

Als Carbonsäurekomponenten kommen z.B. α,β-ethylenisch ungesättigte Carbonsäuren, wie Maleinsäure, Maleinsäureanhydrid, Fumarsäure, Itaconsäure, Citraconsäure, gesättigte aliphatische Carbonsäuren bzw. deren Anhydride, wie Bernsteinsäure, Adipinsäure, Korksäure, Sebacinsäure, Azelainsäure, natürliche Fettsäuren und polymerisierte natürliche Fettsäuren, wie Leinölfettsäure, Dimer- und Polymerleinölfettsäure, Rizinusöl, Rizinusölfettsäure, gesättigte cycloaliphatische Carbonsäuren bzw. deren Anhydride, wie Tetrahydrophthalsäure, Hexahydrophthalsäure, Endomethylentetrahydrophthalsäure, Norbonendicarbonsäure, aromatische Carbonsäuren bzw. deren Anhydride, wie Phthalsäure in ihren Isomerformen, auch Tri- und Tetracarbonsäuren bzw. deren Andydride, wie Trimellithsäure, Pyromellithsäure, mit Allylalkohol teilveresterte Polycarbonsäuren, z.B. Trimellithsäuremonoallylester oder Pyromellithsäurediallylester in Frage, wobei Benzophenoncarbonsäuren von besonderer Bedeutung sind, weil über diese Copolymer UV-Licht-anregbare Strukturen eingebaut werden können.

Als Hydroxylkomponenten kommen z.B. ggf. alkoxylierte, mindestens zweiwertige aliphatische und/oder cycloaliphatische Alkohole wie Ethylenglykol, Propylenglykol, Polyethylenglykole, Polypropylenglykole, Butandiolisomere, Hexandiol, Trimethylolpropan, Pentaerythrit, Neopentylglykol, Cyclohexandimethanol, Bisphenol A, hydriertes Bisphenol A, OH-polyfunktionelle Polymere, wie hydroxylgruppenmodifizierte Polybutadiene oder hydroxylgruppentragende Polyurethanprepolymere, Glycerin, Mono- und Diglyceride von gesättigten und ungesättigten Fettsäuren, insbesondere Monoglyceride von Leinöl oder Sonnenblumenöl in Frage. Des weiteren kommen auch ungesättigte Alkohole in Frage, wie mit Allylalkohol (teil-)veretherte polyfunktionelle Hydroxylverbindungen, z.B. Trimethylolethanmonoallylether, Trimethylolethandiallylether, Trimethylolpropanmonoallylether, Trimethylolpropandiallylether, Pentaerythritmonoallylether, Pentaerythritdiallylether, Buten-2-diol-1,4 und alkoxyliertes Buten-2-diol-1.4.

Wenn zur Regulation des Molekulargewichtes monofunktionelle Stoffe eingesetzt werden, sind dies bevorzugt monofunktionelle Alkohole, wie Ethanol, Propanol, Butanol, Hexanol, Decanol, Isodecanol, Cyclohexanol, Benzylalkohol oder Allylalkohol. Unter den Begriff Polyester im Sinne der vorliegenden Erfindung fallen auch Polykondensate, die neben den Estergruppen Amid- und/oder Imidgruppen aufweisen, wie sie durch Mitverwendung von Aminoverbindungen erhalten werden. Solcherart modifizierte Polyester sind z.B. durch die DE-A-15700273 und DE-A-17200323 bekannt. Werden dabei Endomethylentetrahydrophthalsäure- und Tetrahydrophthalsäurestrukturen, über die Imide dieser Säuren mit Hydroxyalkyaminen wie sie dort genannt sind, eingeführt, so sind das RGb im Sinne dieser Erfindung.

An die Doppelbindungen der verwendeten. ungesättigten Polyester kann auch DCPD angelagert werden, wodurch es ermöglicht wird, Endomethylentetrahydrophthalsäurestrukturen einzubauen, die RGb im Sinne dieser Erfindung darstellen. Diese Endomethylentetrahydrophthalsäurestrukturen können dabei an den kettenständigen Doppelbindungen der Polyester und/oder an terminalen Doppelbindungen, wie sie z.B. über Stoffe gemäß der allgemeinen Formel 3 eingeführt werden, vorhanden sein. Die Doppelbindungen aus den ungesättigten Dicarbonsäuren und/oder ungesättigten Diolen sind kettenständige RGb im Sinne der Erfindung. Das Einführen der RG kann durch Cokondensation und/oder durch polymeranaloge Umsetzungen an Polyestern mit funktionellen Gruppen erfolgen. Beispiele für Cokondensationen sind die Mitverwendung von Trimethylolpropandi- und -monoallylether, Pentaerythritdi- und -monoallylether, Buten-2-diol-1,4, alkoxyliertes Buten-2-diol-1,4, Allylalkohol und Verbindungen laut Formeln 3, 4, 5, 7, 8.

Bevorzugt zur Einführung von RGa ist die Cokondensation von Benzophenoncarbonsäuren oder deren Anhydriden. Weiter bevorzugt ist die Addition der Reaktionsprodukte von Hydroxybenzophenonen mit einem Überschuß an Diisocyanaten mit hydroxyfunktionellen Polyestem.

Auf diese Weise lassen sich auch RGb in hydroxyfunktionelle Polyester einführen. Dazu werden zunächst bevorzugt Diisocyanate mit Isocyanatgruppen unterschiedlicher Reaktivität, z.B. Isophorondiisocyanat oder 1,4-Toluylendiisocanat, mit einer halbäquivalenten Menge von z.B. Hydroxyacrylaten, Hydroxyvinylethern, Hydroxyallylestern, Hydroxyallylethern, Hydroxy-DCPD-Verbindungen laut Formeln RGb4 und RGb6 umgesetzt und diese Umsetzungsprodukte dann mit den hydroxyfunktionellen Polyestern zur Reaktion gebracht. Bei den genannten Reaktionen können auch gleichzeitig hydroxylfunktionelle Stoffe unterschiedlicher Art eingesetzt werden.

Poly(meth)acrylatharze, die erfindungsgemäß mit RG funktionalisiert sind, stellen eine weitere wichtige erfindungsgemäße Polymerklasse dar und werden durch Copolymerisation von Acrylestern, ggf. mit weiteren copolymerisierbaren Verbindungen, erhalten.

Die erfindungsgemäßen Poly(meth)acrylatharze können aber auch in Lösungsmitteln hergestellt werden. Eine weitere vorteilhafte Methode zur Herstellung von Poly(meth)acrylaten ist die lösungsmittelfreie, radikalische Substanzpolymerisation im gerührten Reaktor, ggf. unter Druck oder in kontinuierlichen Durchlaufreaktoren bei Temperaturen oberhalb der Schmelztemperatur der gebildeten Polymeren.

Als Komponenten zum Aufbau von Poly(meth)acrylatharzen sind beispielsweise die bekannten Ester der Acrylsäure und Methacrylsäure mit aliphatischen, cycloaliphatischen, araliphatischen und aromatischen Alkoholen mit 1 bis 40 Kohlenstoffatomen geeignet, wie z.B. Methyl-(meth)acrylat, Ethyl(meth)acrylat, Propyl(meth)acrylat, Isopropyl-(meth)acrylat, n-Butyl(meth)acrylat, Isobutyl-(meth)acrylat, tert.-Butyl(meth)acrylat, Amyl(meth)acrylat, Isoamyl-(meth)acrylat, Hexyl(meth)acrylat, 2-Ethylhexyl-(meth)acrylat, Decyl(meth)acrylat, Undecyl(meth)acrylat, Dodecyl(meth)acrylat, Tridecyl(meth)acrylat, Cyclohexyl(meth)acrylat, Methylcyclohexyl(meth)acrylat, Benzyl(meth)acrylat, Tetrahydrofurfuryl(meth)acrylat, Furfuryl(meth)acrylat und die Ester der 3-Phenylacrylsäure und deren verschiedenen Isomerieformen, wie Methylcinnamat, Ethylcinnamat, Butylcinnamat, Benzylcinnamat, Cyclo-hexylcinnamat, Isoamylcinnamat, Tetrahydrofurfurylcinnamat, Furfurylcinnamat, Acrylamid, Methacrylamid, Methylolacrylamid, Methylolmethacrylamid, Acrylsäure, Methacrylsäure, 3-Phenylacrylsäure, Hydroxyalkyl(meth)acrylate, wie Ethylglykolmono(meth)acrylat, Butylglykolmono(meth)acrylate, Hexandiolmono(meth)acrylat, Glycolether(meth)acrylate, wie Methoxyethylglykolmono(meth)acrylat, Ethyloxyethylglykolmono(meth)acrylat, Butyloxyethylglykolmono(meth)acrylat, Phenyloxyethylglykolmono(meth)acrylat, Glycidylacrylat, Glycidylmethacrylat, Amino(meth)acrylate, wie 2-Aminoethyl-(meth)acrylat.

Als weitere Komponenten kommen radikalisch copolymerisierbare Monomere, wie Styrol, 1-Methylstyrol, 4-tert.-Butylstyrol, 2-Chlorstyrol, Vinylester von Fettsäuren mit 2 bis 20 Kohlenstoffatomen, wie Vinylacetat, Vinylpropionat, Vinylether von Alkanolen mit 2 bis 20 Kohlenstoffatomen, wie Vinylisobutylether, Vinylchlorid, Vinylidenchlorid, Vinylalkylketone, Diene, wie Butadien und Isopren sowie Ester der Malein- und Crotonsäure in Frage. Geeignete Monomere sind auch cyclische Vinylverbindungen, wie Vinylpyridin, 2-Methyl-1-vinylimidazol, 1-Vinylimidazol, 5-Vinylpyrrolidon und N-Vinylpyrrolidon. Auch allylisch ungesättigte Monomere können eingesetzt werden, wie z.B. Allylalkohol, Allylalkylester, Monoallylphthalat und Allylphthalat. Auch Acrolein und Methacrolein und polymerisierbare Isocyanate kommen in Frage.

Der Einbau der RG kann durch Copolymerisation bei der Herstellung der Poly(meth)acrylate oder durch anschließende polymeranaloge Umsetzung erfolgen. Gut polymerisierbare Verbindungen, die Gruppen RGb aufweisen sind z.B. Dihydrodicyclopentadienyl(meth)acrylat, Dihydrodicyclopentadienylethacrylat und Dihydrodicyclopentadienylcinnamat. Gut polymerisierbare Verbindungen, die weitere Gruppen aufweisen an denen eine polymeranaloge Funktionalisierung möglich ist, sind z.B. copolymerisierbare Epoxidverbindungen, wie Glycidyl(meth)acrylat oder Hydroxyalkyl-(meth)acrylate. Die so eingebauten Hydroxyl- und/oder Epoxidgruppen sind Anker-Gruppen für polymeranaloge Funktionalisierungsreaktionen der Polymeren. Epoxydgruppen sind z.B. zur Einführung von acrylischen Doppelbindungen durch Umsetzung mit (Meth)acrylsäure (RGb) und/oder zur Einführung von Vinylethergruppen (RGb) durch Umsetzung mit Aminovinyletherverbindungen, wie z.B. Diethanolamindivinylether oder zur Einführung von Benzophenongruppen (RGa) durch Umsetzung mit Hydroxy- und/oder Aminobenzophenonen geeignet.

Polyurethane, die erfindungsgemäß mit RG funktionalisiert sind, stellen eine weitere wichtige erfindungsgemäße Polymerklasse dar und werden durch auf dem Fachmann bekannte Weise aus polyfunktionellen, meist difunktionellen Isocyanaten und und Polyhydroxy- und/oder Polyaminoverbindungen erhalten. Auch dabei ist es möglich RGa und/oder RGb direkt beim Aufbau der Polyurethane mit einzubauen oder in funktionelle Polyurethane nachträglich einzuführen. Die chemischen Reaktionspartner sind dabei im Wesentlichen die gleichen wie bei den vorherig beschriebenen Polymeren. Bevorzugt werden RGa über die Mitverwendung von funktionellen Benzophenonverbindungen und RGb über Hydroxy-DCPD-Verbindungen laut Formeln RGb4 und RGb6 eingeführt.

Weitere Details bzgl. der verwendbaren Polyurethan-Grundkörper sind der entsprechenden Diskussion der als Polymer IIb verwendbaren Polyurethane zu entnehmen.

Die Herstellung erfindungsgemäßer Polymer IIa erfolgt nach allgemein bekannten Regeln und ist dem Polymerfachmann bekannt, was z.B. die Einstellung eines erwünschten Molekulargewichtes durch die Mitverwendung von regelnden oder monofunktionellen Einsatzstoffe oder die Einstellung einer gewünschten Glasübergangstemperatur durch Balancierung von hart/weich Komponenten betrifft.

Verbindungen mit besonderer Eignung zur Einführung von RGa in erfindungsgemäß verwendeten Polymeren IIa, besonders in, wie im vorherigen beschriebene, epoxidund/oder hxdroxyfunktionalisierte Polyester, Polyurthane oder Polyacrylate sind:
2-, 3- und 4-Hydroxybenzophenon, 2-Hydroxy-5-methylhydroxybenzophenon, 2-Hydroxy-4-methoxybenzophenon, 2-Hydroxy-4-octyloxybenzophenon, 2-Hydroxy-4-dodecyloxybenzophenon, 2-Hydroxy-5-chlorohydroxybenzophenon, 2-Hydroxy-4-methoxy-4'-methylbenzophenon, 2-Hydroxy-4-methoxy-4'-chlorobenzophenon, 4-Hydroxy-3-methylbenzophenon, 4-Hydroxy-4'-methoxybenzophenon, 4-Hydroxy-4'chlorobenzophenon, 4-Hydroxy-4'-fluorobenzophenon, 4-Hydroxy-4'-cyanobenzophenon, 4-Hydroxy-2',4'-dimethoxybenzophenon, 2,2',4,4'- und 2,4-Dihydroxybenzophenon, 4-tert.-Butyl-2,4-dihydroxybenzophenon, 2,2'-Dihydroxy-4-methoxy-benzophenon, 2,2'-Dihydroxy-4-octoxybenzophenon, 2,2'-Dihydroxy-4,4'-dimethoxy-benzophenon, 2,4,4'-, 2,3,4- und 2,4,6-Trihydroxybenzophenon, 2,2,'-, 4,4'-, 2,3,4,4'- und 2,3',4,4'-Tetrahydroxybenzophenon, 2-, 3- und 4-Amino-benzophenon, 2-Amino-4-methylbenzophenon, 2-Amino-6-methylbenzophenon,
2-Amino-4'-methylbenzophenon, 2-Amino-4'-chloro-5-fluorobenzophenon, 2-Amino-5-chlorobenzophenon, 2-Amino-5-bromobenzophenon, 2-Amino-5-methylbenzonon, 2-Amino-N-ethylbenzophenon, 2-Amino-2',5'-dimethylbenzophenon, 4-Amino-2-chlorobenzophenon, 4-Amino-4'-methoxybenzophenon, 3,4-, 4,4'- und 3,3'-Diaminobenzophenon, 4,4'-Bis(methylamino)benzophenon, 3,3',4,4'-Tetraaminobenzophenon, 2-, 3- und 4-Benzoylbenzoesäure, 2-Benzoyl-3'-methylbenzoesäure, 2-Benzoyl-4'-Ethylbenzoesäure, 2-Benzoyl-3,6-dimethylbenzoesäure, 2-Benzoyl-2',6'-dimethylbenzoesäure, 2-Benzoyl-3',4'-dimethylbenzoesäure, 2-Benzoyl-2',4',6-dimethylbenzoesäure, 2-Benzoyl-p-hydroxybenzoesäure, 2-Benzoyl-4'-methyl-3'-chlorobenzoesäure, 2-Benzoyl-6-chlorobenzoesäure, 4-Benzoyl-4'-isopropylbenzoesäure, 4-Benzoyl-4'-chlorobenzoesäure, 4-Benzoyl-4'-(2-carboxypropyl)benzoesäure, 2,4-, 3,4- und 4,4'-Benzophenondicarbonsäure, 2',3,4-, 3,3',4- und 3,4,4'-Benzophenontricarbonsäure, 3,3',4,4'-Benzophenontetracarbonsäure und -tetracarbonsäuredianhydrid, 2-Hydroxy-4-methoxy-5-sulfobenzophenon, 4-(4-Carboxyphenyloxy)benzophenon, 4-(3,4-Bis(carboxy)-phenyloxy)benzophenon und das entsprechende Anhydrid, 4'-(4-Carboxyphenyloxy)-benzophenon-4-carbonsäure, 4'-(4-Carboxyphenyloxy)-benzophenon-3,4-dicarbonsäure und das entsprechende Anhydrid, 4'-(3,4-Bis(carboxy)-phenyloxy)-benzophenon-2,4- und -3,4-dicarbonsäure und die entsprechenden Anhydride, 4-(4-Cyanobenzoyl)-thiophenol, 4-(2-Hydroxyethoxy)phenyl-(2-hydroxy-2-propyl)keton, 4-(2-Aminoethoxy)phenyl-(2-hydroxy-2-propyl)keton, 4-(2-Hydroxycarbonylmethoxy)phenyl-(2-hydroxy-2-propyl)keton, 4-(2-Isocyanatoethoxy)phenyl-(2-hydroxy-2-propyl)keton, 4-(2-Isocyanatomethoxy)phenyl-(2-hydroxy-2-propyl)keton, 2-([2-]6-Isocyanatohexylaminocar-bonyloxy)ethoxylthioxanthon, Phenylglyoxylsäure.

Ferner können auch die nachfolgend unter "Polymere IIb" diskutierten Polymere und Copolymere als Polymere IIa verwendet werden, sofern sie mit Reaktionsgruppen RG, insbesondere RGa und/oder RGb versehen werden. Insbesondere sind hierbei mit Reaktionsgruppen RG versehene Polymere und Copolymere halogenhaltiger olefinischer Verbindungen (Gruppe 4f)) zu nennen.

Die Vernetzung der erfindungsgemäß verwendeten Polymere IIa erfolgt bevorzugt durch energiereiche Strahlung, insbesondere durch UV-Licht. Dabei ist in den meisten Fällen kein weiterer Fotoinitiatorzusatz notwendig, d.h. die Stoffe sind selbst fotovernetzend, wobei ein besonderer Vorteil ihre geringe Inhibierung durch Luft ist. Es ist aber nicht ausgeschlossen, weitere handelübliche Fotoinitiatoren zuzusetzen. Weiter sind viele Polymere IIa auch thermisch vernetzbar. Besonders hohe thermische Vernetzbarkeit ist in Gegenwart von Peroxiden und/oder C-C-labilen Stoffen vom Typ der Benzpinakole bei ungesättigten Systemen, die zusätzlich DCPD-Gruppen aufweisen, gegeben. Solche Systeme sind z.T. auch ohne Peroxide thermisch härtbar. Eine bevorzugte schnelle Vernetzung wird erreicht durch z.B. kombinierte Anwendung von Wärme und UV-Licht, z.B. durch Kombination von IR- und UV-Quellen.

Als Polymere IIb werden thermoplastische und ionenleitende Polymere eingesetzt. Insbesondere zu nennen sind:
1) Homo-, Block- oder Copolymere (Polymere IIb1) erhältlich durch Polymerisation von
   b1) 5 bis 100 Gew.-% bezogen auf das Polymer IIb1 eines Kondensationsprodukts aus
      a) mindestens einer Verbindung (a), die in der Lage ist mit einer Carbonsäure oder einer Sulfonsäure oder einem Derivat oder einem Gemisch aus zwei oder mehr davon zu reagieren, und
      b) mindestens 1 Mol pro Mol dieser Verbindung (a) einer Carbonsäure oder Sulfonsäure (b), die mindestens eine radikalisch polymerisierbare funktionelle Gruppe aufweist, oder eines Derivats davon oder eines Gemischs aus zwei oder mehr davon
      und
   b2) 0 bis 95 Gew.-% bezogen auf das Polymer IIb1 einer weiteren Verbindung (c) mit einem mittleren Molekulargewicht (Zahlenmittel) von mindestens 5.000 mit Polyethersegmenten in Haupt- oder Seitenkette.

   Vorzugsweise ist das Polymer IIb1 erhältlich durch
   b1) 5 bis 100 Gew.-% bezogen auf das Polymer IIb1 eines Kondensationsprodukts aus
      a) einem mehrwertigen Alkohol, welcher in der Hauptkette Kohlenstoffund Sauerstoffatome enthält,
         und
      b) mindestens 1 Mol pro Mol des mehrwertigen Alkohols einer α, β-ungesättigten Carbonsäure,
      und
   b2) 0 bis 95 Gew.-% bezogen auf das Polymer IIb1 einer weiteren Verbindung (c) mit einem mittleren Molekulargewicht (Zahlenmittel) von mindestens 5000 mit Polyethersegmenten in Haupt- oder Seitenkette.

   Als Verbindung (a), die in der Lage ist mit einer Carbonsäure oder einer Sulfonsäure (b) oder einem Derivat oder einem Gemisch aus zwei oder mehr davon zu reagieren, sind prinzipiell alle Verbindung verwendbar, die dieses Kriterium erfüllen, und frei sind von Reaktivgruppen RG.
   Vorzugsweise wird die Verbindung (a) ausgewählt aus der Gruppe bestehend aus einem ein- oder mehrwertigen Alkohol, der in der Hauptkette ausschließlich Kohlenstoffatome aufweist; einem ein- oder mehrwertigen Alkohol, der in der Hauptkette neben mindestens zwei Kohlenstoffatomen mindestens ein Atom aufweist, das ausgewählt wird aus der Gruppe bestehend aus Sauerstoff, Phosphor und Stickstoff; einer Silicium enthaltenden Verbindung; einem mindestens eine primäre Aminogruppe aufweisenden Amin; einem mindestens eine sekundäre Aminogruppe aufweisenden Amin; einem Aminoalkohol; einem ein- oder mehrwertigen Thiol; einer Verbindung mit mindestens einer Thiol- und mindestens einer Hydroxylgruppe; und einem Gemisch aus zwei oder mehr davon.
   Unter diesen sind wiederum Verbindungen (a) bevorzugt, die zwei oder mehr funktionelle Gruppen aufweisen, die mit der Carbonsäure oder Sulfonsäure reagieren können.
   Bei der Verwendung von Verbindungen (a), die als funktionelle Gruppe Aminogruppen enthalten, ist es bevorzugt, solche mit sekundären Aminogruppen zu verwenden, sodaß nach der Kondensation entweder überhaupt keine oder nur geringe Mengen an freien NH-Gruppen in der Mischung Ia vorhanden sind.
   Im einzelnen sind als bevorzugte Verbindungen (a) zu nennen:
   ein- oder mehrwertige Alkohole, die in der Hauptkette ausschließlich Kohlenstoffatome aufweisen, mit 1 bis 20, vorzugsweise 2 bis 20 und insbesondere 2 bis 10 alkoholischen OH-Gruppen, insbesondere zwei-, drei- und vierwertige Alkohole, vorzugsweise mit 2 bis 20 Kohlenstoffatomen, wie z.B. Ethylenglycol, Propan-1,2-oder -1,3-diol, Butan-1,2- oder -1,3-diol, Buten-1,4- oder Butin-1,4-diol, Hexan-1,6-diol, Neopentylglycol, Dodecan-1,2-diol, Glycerin, Trimethylolpropan, Pentaerythrit oder Zuckeralkohole, Hydrochinon, Novolak, Bisphenol A, wobei jedoch auch, wie aus obiger Definition hervorgeht, einwertige Alkohole, wie z.B. Methanol, Ethanol, Propanol, n-, sek.- oder tert.-Butanol, usw. eingesetzt werden können; ferner können auch Polyhydroxyolefine, bevorzugt solche mit zwei endständigen Hydroxylgruppen, wie z.B. α,ω-Dihydroxybutadien, verwendet werden;
   Polyesterpolyole, wie sie z.B. aus Ullmanns *Encyklopädie der technischen Chemie,* 4. Aufl., Bd. 19, S. 62-65 bekannt sind und beispielsweise durch Umsetzung zweiwertiger Alkohole mit mehrwertigen, bevorzugt zweiwertigen Polycarbonsäuren erhalten werden;
   ein- oder mehrwertige Alkohole, die in der Hauptkette neben mindestens zwei Kohlenstoffatomen mindestens ein Sauerstoffatom enthalten, vorzugsweise Polyetheralkohole, wie z.B. Polymerisationsprodukte von Alkylenepoxiden, beispielsweise Isobutylenoxid, Propylenoxid, Ethylenoxid, 1,2-Epoxybutan, 1,2-Epoxypentan, 1,2-Epoxyhexan, Tetrahydrofuran, Styroloxid, wobei auch an den Endgruppen modifizierte Polyetheralkohole, wie z.B. mit NH₂-Endgruppen modifizierte Polyetheralkohole verwendet werden können; diese Alkohole besitzen vorzugsweise ein Molekulargewicht (Zahlenmittel) von 100 bis 5.000, weiter bevorzugt 200 bis 1.000, und insbesondere 300 bis 800; derartige Verbindungen sind an sich bekannt und beispielsweise unter den Marken Pluriol® oder Pluronic® (Firma BASF Aktiengesellschaft) kommerziell verfügbar;
   Alkohole, wie oben definiert, in denen ein Teil oder alle Kohlenstoffatome durch Silicium ersetzt sind, wobei hier insbesondere Polysiloxane oder Alkylenoxid/Siloxan-Copolymere oder Gemische aus Polyetheralkoholen und Polysiloxanen, wie sie beispielsweise in der EP-B 581 296 und der EP-A 525 728 beschrieben sind, verwendet werden können, wobei bzgl. des Molekulargewichts dieser Alkohole ebenfalls das oben Gesagte gilt;
   Alkohole, wie oben definiert, insbesondere Polyetheralkohole, bei denen ein Teil oder alle Sauerstoffatome durch Schwefelatome ersetzt sind, wobei bzgl. des Molekulargewichts dieser Alkohole ebenfalls das oben Gesagte gilt;
   ein- oder mehrwertige Alkohole, die in der Hauptkette neben mindestens zwei Kohlenstoffatomen mindestens ein Phosphoratom oder mindestens ein Stickstoffatom enthalten, wie z.B. Diethanolamin, Triethanolamin;
   Lactone, die sich von Verbindungen der allgemeinen Formel HO-(CH₂)_{z}-COOH ableiten, wobei z eine Zahl von 1 bis 20 ist, wie z.B. ε-Caprolacton, β-Propiolacton, γ-Butyrolacton oder Methyl-ε-caprolacton;
   eine Silicium enthaltende Verbindung, wie z.B. Di- oder Trichlorsilan, Phenyltrichlorsilan, Diphenyldichlorsilan, Dimethylvinylchlorsilan;
   Silanole, wie z.B. Trimethylsilanol;
   ein mindestens eine primäre und/oder sekundäre Aminogruppe aufweisendes Amin, wie z.B. Butylamin, 2-Ethylhexylamin, Ethylendiamin, Hexamethylendiamin, Diethylentriamin, Tetraethylenpentamin, Pentaethylenhexamin, Anilin, Phenylendiamin;
   Polyetherdiamine, wie z.B. 4,7-Dioxydecan-1,10-diamin, 4,11-Dioxytetradecan-1,14-diamin;
   ein ein- oder mehrwertiges Thiol, wie z.B. aliphatische Thiole, wie z.B. Methanthiol, Ethanthiol, Cyclohexanthiol, Dodecanthiol; aromatische Thiole, wie z.B. Thiophenol, 4-Chlorthiophenol, 2-Mercaptoanilin;
   eine Verbindung mit mindestens einer Thiol- und mindestens einer Hydroxylgruppe, wie z.B. 4-Hydroxythiophenol sowie Monothioderivate der oben definierten mehrwertigen Alkohole;
   Aminoalkohole, wie z.B. Ethanolamin, N-Methyl-ethanolamin, N-Ethylethanolamin, N-Butyl-ethanolamin, 2-Amino-1-propanol, 2-Amino-1-phenylethanol;
   Mono- oder Polyaminopolyole mit mehr als zwei aliphatisch gebundenen Hydroxylgruppen, wie z.B. Tris(hydroxymethyl)-methylamin, Glucamin, N,N'-Bis-(2-hydroxyethyl)-ethylendiamin, sowie deren Gemische.

   Es können auch Gemische aus zwei oder mehr der oben beschriebenen Verbindungen (a) eingesetzt werden.
   Die oben erwähnten Verbindungen (a) werden erfindungsgemäß mit einer Carbonsäure oder Sulfonsäure (b), die mindestens eine radikalisch polymerisierbare funktionelle Gruppe aufweist, oder einem Derivat davon oder einem Gemisch aus zwei oder mehr davon kondensiert, wobei mindestens eine, vorzugsweise alle der freien zur Kondensation befähigten Gruppen innerhalb der Verbindungen (a) mit der Verbindung (b) kondensiert werden.
   Als Carbonsäure oder Sulfonsäure (b) können im Rahmen der vorliegenden Erfindung prinzipiell alle Carbon- und Sulfonsäuren, die mindestens eine radikalisch polymerisierbare funktionelle Gruppe aufweisen, sowie deren Derivate eingesetzt werden. Dabei umfaßt der hier verwendete Begriff "Derivate" sowohl Verbindungen, die sich von einer Carbon- oder Sulfonsäure ableiten, die an der Säurefunktion modifiziert ist, wie z.B. Ester, Säurehalogenide oder Säureanhydride, als auch Verbindungen, die sich von einer Carbon- oder Sulfonsäure ableiten, die am Kohlenstoffgerüst der Carbon- oder Sulfonsäure modifiziert ist, wie z.B. Halogencarbon- oder -sulfonsäuren.
   Als Verbindung (b) sind dabei insbesondere zu nennen:
   α,β-ungesättigte Carbonsäuren oder β,γ-ungesättigte Carbonsäuren oder deren Derivate.

   Besonders geeignete α,β-ungesättigte Carbonsäuren sind dabei solche der Formel 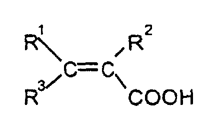 in der R¹, R² und R³ Wasserstoff oder C₁- bis C₄-Alkylreste darstellen, wobei unter diesen wiederum Acrylsäure und Methacrylsäure bevorzugt sind; weiterhin gut einsetzbar sind Zimtsäure, Maleinsäure, Fumarsäure, Itaconsäure, oder p-Vinylbenzoesäure, sowie Derivate davon, wie z.B. Anhydride, wie z.B. Maleinsäure- oder Itaconsäureanhydrid;
   Halogenide, insbesondere Chloride, wie z.B. Acryl- oder Methacrylsäurechlorid; Ester, wie z.B. (Cyclo)alkyl(meth)acrylate mit bis zu 20 C-Atomen im Alkylrest, wie z.B. Methyl-, Ethyl-, Propyl-, Butyl-, Hexyl-, 2-Ethylhexyl-, Stearyl-, Lauryl-, Cyclohexyl-, Benzyl-, Trifluormethyl-, Hexafluorpropyl-, Tetrafluorpropyl(meth)acrylat, Polypropylenglycolmono(meth)acrylate, Polyethylenmono(meth)acrylate, Poly(meth)acrylate von mehrwertigen Alkoholen, wie z.B. Glycerindi(meth)acrylat, Trimethylolpropan-di(meth)acrylat, Pentaerythrit-di- oder -tri(meth)acrylat, Diethylenglycolbis(mono-(2-acryloxy)ethyl)carbonat, Poly(meth)acrylate von Alkoholen, die selbst wiederum eine radikalisch polymerisierbare Gruppe aufweisen, wie z.B. Ester aus (Meth)acrylsäure und Vinyl- und/oder Allylalkohol;
   Vinylester anderer aliphatischer oder aromatischer Carbonsäuren, wie z.B Vinylacetat, Vinylpropionat, Vinylbutanat, Vinylhexanoat, Vinyloctanoat, Vinyldecanoat, Vinylstearat, Vinylpalmitat, Vinylcrotonat, Divinyladipat, Divinylsebacat, 2-Vinyl-2-ethylhexanoat, Vinyltrifluoracetat;
   Allylester anderer aliphatischer oder aromatischer Carbonsäuren, wie z.B. Allylacetat, Allylpropionat, Allylbutanat, Allylhexanoat, Allyloctanoat, Allyldecanoat, Allylstearat, Allylpalmitat, Allylcrotonat, Allylsalicylat, Allyllactat, Diallyloxalat, Allylstearat, Allylsuccinat, Diallylglutarat, Diallyladipat, Diallylpimelat, Diallyicinnamat, Diallylmaleat, Diallylphthalat, Diallylisophthalat, Triallylbenzol-1,3,5-tricarboxylat, Allylfluoracetat, Allylperfluorbutyrat, Allylperfluoroctanoat;
   β,γ-ungesättigte Carbonsäuren und deren Derivate, wie z.B. Vinylessigsäure, 2-Methylvinylessigsäure, Isobutyl-3-butenoat, Allyl-3-butenoat, Allyl-2-hydroxy-3-butenoat, Diketen;
   Sulfonsäuren, wie z.B. Vinylsulfonsäure, Allyl- und Methallylsulfonsäure, sowie deren Ester und Halogenide, Benzolsulfonsäurevinylester, 4-Vinylbenzolsulfonsäureamid
   Es können auch Gemische aus zwei oder mehr der oben beschriebenen Carbon- und/oder Sulfonsäuren eingesetzt werden;
   Das Polymer IIb1 kann durch Umsetzung von 5 bis 100 Gew.-%, vorzugsweise 30 bis 70 Gew.-% bezogen auf das Polymer IIb1 des oben definierten Kondensationsprodukts und 0 bis 95 Gew.-%, insbesondere 30 bis 70 Gew.-% bezogen auf das Polymer IIb1 einer Verbindung (c), erhalten werden.
2) Homo-, Block- oder Copolymere IIb2 (Polymere IIb2), erhältlich durch Polymerisation von
   b1) 5 bis 75 Gew.-%, bezogen auf das Polymer IIb2 einer zur Polymerisation befähigten Verbindung (d), vorzugsweise einer zur radikalischen Polymerisation befähigten ungesättigten Verbindung (d), die verschieden von der obigen Carbonsäure oder der Sulfonsäure (b) oder einem Derivat davon ist, oder eines Gemischs aus zwei oder mehr davon
      und
   b2) 25 bis 95 Gew.-%, bezogen auf das Polymer IIb2 der weiteren Verbindung (c) mit einem mittleren Molekulargewicht (Zahlenmittel) von mindestens 5.000 mit Polyethersegmenten in Haupt- oder Seitenkette.

   Als zur Herstellung des Polymers IIb2 verwendbare zur radikalischen Polymerisation befähigte Verbindung (d) sind im einzelnen folgende zu nennen:
   Olefinische Kohlenwasserstoffe, wie z.B. Ethylen, Propylen, Butylen, Isobuten, Hexen oder höhere Homologen und Vinylcyclohexan;
   (Meth)acrylnitril;
   halogenhaltige olefinische Verbindungen, wie z.B. Vinylidenfluorid, Vinylidenchlorid, Vinylfluorid, Vinylchlorid, Hexafluorpropen, Trifluorpropen, 1,2-Dichlorethylen, 1,2-Difluorethylen und Tetrafluorethylen;
   Vinylalkohol, Vinylacetat, N-Vinylpyrrolidon, N-Vinylimidazol, Vinylformamid;
   Phosphornitridchloride, wie z.B. Phosphordichloridnitrid, Hexachlor(triphosphazen), sowie deren durch Alkoxy-, Phenoxy-, Amino- und Fluoralkoxy-Gruppen teilweise oder vollständig substituierte Derivate, d.h. Verbindungen, die zu Polyphosphazenen polymerisiert werden können;
   aromatische, olefinische Verbindungen, wie z.B. Styrol, a-Methylstyrol;
   Vinylether, wie z.B. Methyl-, Ethyl-, Propyl-, Isopropyl-, Butyl-, Isobutyl-, Hexyl-, Octyl-, Decyl-, Dodecyl-, 2-Ethylhexyl-, Cyclohexyl-, Benzyl-, Trifluormethyl-, Hexafluorpropyl-, Tetrafluorpropylvinylether.

   Es können selbstverständlich auch Gemische der obigen Verbindungen (d) eingesetzt werden, wobei dann Copolymere entstehen, die je nach Herstellungsart die Monomeren statistisch verteilt enthalten, oder Blockcopolymere ergeben.
   Diese Verbindungen (d) wie auch die oben beschriebenen Kondensationsprodukte werden nach herkömmlicher, dem Fachmann wohl bekannter Art polymerisiert, vorzugsweise radikalisch polymerisiert, wobei bezüglich der erhaltenen Molekulargewichte das hierin nachstehend bezüglich der Verbindung (c) Gesagte gilt.
   Als Verbindung (c) kommen in erster Linie Verbindungen mit einem mittleren Molekulargewicht (Zahlenmittel) von mindestens 5.000, vorzugsweise 5.000 bis 20.000.000, insbesondere 100.000 bis 6.000.000, in Betracht, die in der Lage sind, Lithiumkationen zu solvatisieren und als Bindemittel zu fungieren.
   Geeignete Verbindungen (c) sind beispielsweise Polyether und Copolymere, die mindestens 30 Gew.-% der folgenden Struktureinheit, bezogen auf das Gesamtgewicht der Verbindung (c), aufweisen: 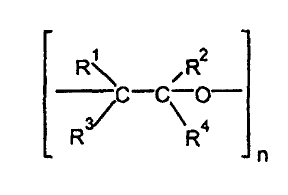 wobei R¹, R², R³ und R⁴ Arylgruppen, Alkylgruppen, vorzugsweise Methylgruppen, oder Wasserstoff darstellen, gleich oder unterschiedlich sein und Heteroatome wie Sauerstoff, Stickstoff, Schwefel oder Silicium enthalten können.
   Solche Verbindungen sind beispielsweise in: M. B. Armand et. al., Fast Ion Transport in Solids, Elsevier, New York, 1979, S. 131-136, oder in FR-A 7832976 beschrieben.
   Die Verbindung (c) kann auch aus Gemischen solcher Verbindungen bestehen.
   Das Polymer IIb2 kann durch Umsetzung von 5 bis 75 Gew.-%, vorzugsweise 30 bis 70 Gew.-% bezogen auf das Polymer IIb2 einer Verbindung (d) und 25 bis 95 Gew.-%, insbesondere 30 bis 70 Gew.-% bezogen auf das Polymer IIb2 einer Verbindung (c), erhalten werden;
3) Polycarbonate, wie z.B. Polyethylencarbonat, Polypropylencarbonat, Polybutadiencarbonat, Polyvinylidencarbonat.
4) Homo-, Block- und Copolymere, hergestellt aus
   a) olefinischen Kohlenwasserstoffen, wie z.B. Ethylen, Propylen, Butylen, Isobuten, Propen, Hexen oder höhere Homologen, Butadien, Cyclopenten, Cyclohexen, Norbornen, Vinylcyclohexan, 1,3-Pentadien, 1,3-, 1,4-, 1,5-Hexadien, Isopren, Vinylnorbonen;
   b) aromatische Kohlenwasserstoffe wie z.B. Styrol und Methylstyrol;
   c) Acrylsäure oder Methacrylsäureester, wie Methyl-, Ethyl-, Propyl-, Isopropyl-, Butyl-, Isobutyl-, Hexyl-, Octyl-, Decyl-, Dodecyl-, 2-Ethylhexyl, Cyclohexyl-, Benzyl-, Trifluoromethyl-, Hexafluoropropyl-, Tetrafluoropropylacrylat bzw. -methacrylat;
   d) Acrylnitril, Methacrylnitril, N-Methylpyrrolidon, N-Vinylimidazol, Vinylacetat;
   e) Vinylether, wie z.B. Methyl-, Ethyl-, Propyl-, Isopropyl-, Butyl-, Isobutyl-, Hexyl-, Octyl-, Decyl-, Dodecyl-, 2-Ethylhexyl, Cyclohexyl, Benzyl-, Trifluoromethyl-, Hexafluoropropyl-, Tetrafluoropropyl-vinylether;
   f) Polymere und Copolymere halogenhaltiger olefinischer Verbindungen, wie z.B. Vinylidenfluorid, Vinylidenchlorid, Vinylfluorid, Vinylchlorid, Hexafluorpropen, Trifluorpropen, 1,2-Dichlorethylen, 1,2-Difluorethylen und Tetrafluorethylen; vorzugsweise Polymere oder Copolymere des Vinylchlorids, Acrylnitrils, Vinylidenfluorids; Copolymere aus Vinylchlorid und Vinylidenchlorid, Vinylchlorid und Acrylonitril, Vinylidenfluorid und Hexafluropropylen, Vinylidenfluorid mit Hexafluoropropylen; Terpolymere aus Vinylidenfluorid und Hexafluorpropylen sowie einem Mitglied der Gruppe bestehend aus Vinylfluorid, Tetrafluorethylen und einem Trifluorethylen; insbesondere ein Copolymer aus Vinylidenfluorid und Hexafluorpropylen; und weiter bevorzugt ein Copolymer umfassend 75 bis 92 Gew.- % Vinylidenfluorid und 8 bis 25 Hexafluoropropylen.
   g) 2-Vinylpyridin, 4-Vinylpyridin, Vinylencarbonat.

   Bei der Herstellung der oben genannten Polymere können, falls dies nötig und/oder erwünscht ist, Regler, wie z.B. Mercaptane eingesetzt werden.
5) Polyurethane, beispielsweise erhältlich durch Umsetzung von
   a) organischen Diisocyanaten mit 6 bis 30 C-Atomen wie z.B. aliphatische nichtcyclische Diisocyanate, wie z.B. 1,5-Hexamethylendiisocyanat und 1,6-Hexamethylendiisocyanat, aliphatische cyclische Diisocyanate, wie z.B. 1,4-Cyclohexylendiisocyanat, Dicyclohexylmethandiisocyanat und Isophorondiisocyanat oder aromatische Diisocyanate, wie z.B. Toluylen-2,4-diisocyanat, Toluylen-2,6-diisocyanat, m-Tetramethylxyloldiisocyanat, p-Tetramethylxyloldiisocyanat, 1,5-Tetrahydronaphthylendiisocyanat und 4,4'-Diphenylenmethandiisocyanat oder Gemische solcher Verbindungen,
      mit
   b) mehrwertigen Alkoholen, wie z.B. Polyesterole, Polyetherole und Diole.

   Die Polyesterole sind zweckmäßigerweise überwiegend lineare Polymere mit endständigen OH-Gruppen, bevorzugt solche mit zwei oder drei, insbesondere zwei OH-Endgruppen. Die Säurezahl der Polyesterole ist kleiner als 10 und vorzugsweise kleiner als 3. Die Polyesterole lassen sich in einfacher Weise durch Veresterung von aliphatischen oder aromatischen Dicarbonsäuren mit 4 bis 15 C-Atomen, vorzugsweise 4 bis 6 C-Atomen, mit Glycolen, bevorzugt Glycolen mit 2 bis 25 C-Atomen oder durch Polymerisation von Lactonen mit 3 bis 20 C-Atomen herstellen. Als Dicarbonsäuren lassen sich beispielsweise Glutarsäure, Pimelinsäure, Korksäure, Sebacinsäure, Dodecansäure und vorzugsweise Adipinsäure und Bemsteinsäure einsetzen. Geeignete aromatische Dicarbonsäuren sind Terephthalsäure, Isophthalsäure, Phthalsäure oder Gemische aus diesen Dicarbonsäuren mit anderen Dicarbonsäuren, z.B. Diphensäure, Sebacinsäure, Bemsteinsäure und Adipinsäure. Die Dicarbonsäuren können einzeln oder als Gemische verwendet werden. Zur Herstellung der Polyesterole kann es gegebenenfalls vorteilhaft sein, anstelle der Dicarbonsäuren die entsprechenden Säurederivate, wie Carbonsäureanhydride oder Carbonsäurechloride zu verwenden. Beispiele fiir geeignete Glycole sind Diethylenglycol, 1,5-Pentandiol, 1,10-Decandiol und 2,2,4-Trimethylpentandiol-1,5. Vorzugsweise verwendet werden 1,2-Ethandiol, 1,3-Propandiol, 2-Methyl-1,3-propandiol,1,4-Butandiol, 1,6-Hexandiol, 2,2-Dimethylpropandiol-1,3, 1,4-Dimethylolcyclohexan, 1,4-Diethanolcyclohexan und ethoxylierte oder propoxylierte Produkte des 2,2-Bis-(4-hydroxyphenylen)-propan (Bisphenol A). Je nach den gewünschten Eigenschaften der Polyurethane können die Polyole alleine oder als Gemisch in verschiedenen Mengenverhältnissen verwendet werden. Als Lactone fiir die Herstellung der Polyesterole eignen sich z.B. α,α-Dimethyl-β-propiolacton, γ-Butyrolacton und vorzugsweise ε-Caprolacton.
   Die Polyetherole sind im wesentlichen lineare, endständige Hydroxylgruppen aufweisende Substanzen, die Etherbindungen enthalten. Geeignete Polyetherole können leicht durch Polymerisation von cyclischen Ethern, wie Tetrahydrofuran, oder durch Umsetzung von einem oder mehreren Alkylenoxiden mit 2 bis 4 C-Atomen im Alkylenrest mit einem Startermolekül, das zwei aktive Wasserstoffatome im Alkylenrest gebunden enthält, hergestellt werden. Als Alkylenoxide seien beispielsweise Ethylenoxid, 1,2-Propylenoxid, Epichlorhydrin, 1,2-Butylenoxid, 2,3-Butylenoxid genannt. Die Alkylenoxide können einzeln, alternierend nacheinander oder als Mischung verwendet werden. Als Startermolekül kommen beispielsweise Wasser, Glycole wie Ethylenglycol, Propylenglycol, 1,4-Butandiol und 1,6-Hexandiol, Amine wie Ethylendiamin, Hexamethylendiamin und 4,4'-Diamino-diphenylmethan und Aminoalkohole wie Ethanolamin in Betracht. Geeignete Polyesterole und Polyetherole sowie deren Herstellung sind beispielsweise in EP-B 416 386, geeignete Polycarbonatdiole, vorzugsweise solche auf 1,6-Hexandiol-Basis, sowie deren Herstellung beispielsweise in US-A 4 131 731 beschrieben.
   In Mengen bis zu 30 Gew.-% bezogen auf Gesamtmasse der Alkohole können vorteilhaft aliphatische Diole mit 2 bis 20, vorzugsweise 2 bis 10 C-Atomen, wie 1,2-Ethandiol, 1,3-Propandiol, 1,4-Butandiol, 1,6-Hexandiol, 1,5-Pentandiol, 1,10-Decandiol, 2-Methyl-1,3-propandiol, 2,2-Dimethyl-1,3-propandiol, 2-Methyl-2-butyl-1,3-propandiol, 2,2-Dimethyl-1,4-butandiol, 1,4-Dimethylolcyclohexan, Hydroxypivalinsäureneopentylglycolester, Diethylenglycol, Triethylenglycol und Methyldiethanolamin oder aromatisch-aliphatische oder aromatisch-cycloaliphatische Diole mit 8 bis 30 C-Atomen, wobei als aromatische Strukturen heterocyclische Ringsysteme oder vorzugsweise isocyclische Ringsysteme wie Naphthalin- oder insbesondere Benzolderivate wie Bisphenol A, zweifach symmetrisch ethoxyliertes Bisphenol A, zweifach symmetrisch propoxyliertes Bisphenol A, höher ethoxylierte oder propoxylierte Bisphenol A-Derivate oder Bisphenol F-Derivate sowie Mischungen solcher Verbindungen in Betracht kommen.
   In Mengen bis zu 5 Gew.-%, bezogen auf Gesamtmasse der Alkohole, können vorteilhaft aliphatische Triole mit 3 bis 15, vorzugsweise 3 bis 10 C-Atomen, wie Trimethylolpropan oder Glycerin, das Reaktionsprodukt solcher Verbindungen mit Ethylenoxid und/oder Propylenoxid sowie Mischungen solcher Verbindungen in Betracht kommen.
   Die mehrwertigen Alkohole können funktionelle Gruppen, beispielsweise neutrale Gruppen wie Siloxangruppen, basische Gruppen wie insbesondere tertiäre Aminogruppen oder saure Gruppen oder deren Salze oder Gruppen, die leicht in saure Gruppen übergehen, tragen, die über einen mehrwertigen Alkohol eingeführt werden. Vorzugsweise kann man Diolkomponenten, die solche Gruppen tragen, wie N-Methyldiethanolamin, N,N-Bis(hydroxyethyl)aminomethylphosphonsäurediethylester oder N,N-Bis(hydroxyethyl)-2-aminoessigsäure-(3-sulfopropyl)-ester oder Dicarbonsäuren, die solche Gruppen tragen und für die Herstellung von Polyesterolen verwendet werden können, wie 5-Sulfoisophthalsäure, verwenden.
   Saure Gruppen sind besonders die Phosphorsäure-, Phosphonsäure-, Schwefelsäure-, Sulfonsäure-, Carboxyl-, oder Ammoniumgruppe.
   Gruppen, die leicht in saure Gruppen übergehen, sind beispielsweise die Estergruppe oder Salze, vorzugsweise der Alkalimetalle wie Lithium, Natrium oder Kalium.
6) Die oben beschriebenen Polyesterole an sich, wobei dabei zu beachten ist, daß man Molekulargewichte im Bereich von 10.000 bis 2.000.000, vorzugsweise 50.000 bis 1.000.000 erhält.
7) Polyamine, Polysiloxane und Polyphosphazene, insbesondere solche, wie sich bei der Beschreibung des Polymers IIb2 bereits diskutiert wurden.
8) Polyetherole, wie sie z. B. bei der obigen Diskussion des Polymers IIb1 als Verbindung (c) oder bei der Diskussion der Polyurethane beschrieben wurden.

Es können selbstverständlich auch Gemische der obigen Polymere IIb eingesetzt werden. Die erfindungsgemäß eingesetzten Copolymere IIb können je nach Herstellungsart die Monomeren statistisch verteilt enthalten, oder als Blockcopolymere vorliegen.

Die Polymere IIa und IIb werden nach herkömmlicher, dem Fachmann wohl bekannter Art polymerisiert, vorzugsweise radikalisch polymerisiert. Die Polymere IIa und IIb können sowohl hochmolekular oder oligomer oder als Gemische davon eingesetzt werden.

Die Anteile des Polymers IIa am polymeren Bindemittel II beträgt im allgemeinen 1 bis 100 Gew.-%, vorzugsweise 20 bis 80 Gew.-%, weiter bevorzugt 30 bis 60 Gew.-%. Entsprechend beträgt der Anteil des Polymers IIb am polymeren Bindemittel II im allgemeinen 0 bis 99 Gew.-%, vorzugsweise 20 bis 80 Gew.-% und weiter bevorzugt 40 bis 70 Gew.-%.

Die vorliegende Erfindung betrifft folgende Zusammensetzungen:

Zusammensetzungen wie oben definiert, wobei das Polymer IIa ketten-, end- und/oder seitenständig mindestens eine Reaktivgruppe RGa aufweist, die thermisch und/oder unter UV-Strahlung im Triplett angeregten Zustand zur Wasserstoffabstraktion befähigt ist, und ketten-, end- und/oder seitenständig mindestens eine von RGa verschiedene, mit RGa coreaktive Gruppe RGb aufweist, wobei im Durchschnitt aller Polymermoleküle mindestens je eine Gruppe RGa und eine Gruppe RGb vorhanden ist.

Zusammensetzungen wie oben definiert, wobei das Polymer IIa ein Polymer oder Copolymer eines Acrylats oder Methacrylats ist, und Reaktivgruppen RGa, die Benzophenon-Einheiten enthalten, und Reaktivgruppen RGb, die Dihydrodicyclopentadien-Einheiten enthalten, aufweist.

Zusammensetzungen wie oben definiert, wobei das Polymer IIb ausgewählt wird aus der Gruppe bestehend aus einem Polymer oder Copolymer des Vinylchlorids, Acrylnitrils, Vinylidenfluorids; einem Copolymer aus Vinychlorid und Vinylidenchlorid, Vinylchlorid und Acrylonitril, Vinylidenfluorid und Hexafluoropropylen, Vinylidenfluorid mit Hexafluoropropylen; einem Terpolymer aus Vinylidenfluorid und Hexafluorpropylen sowie einem Mitglied der Gruppe bestehend aus Vinylfluorid, Tetrafluorethylen und einem Trifluorethylen.

Zusammensetzungen wie oben definiert, wobei das Polymer IIa ein Polymer oder Copolymer eines Acrylats oder Methacrylats ist, und Reaktivgruppen RGa, die Benzophenon-Einheiten enthalten, und Reaktivgruppen RGb, die Dihydrodicyclopentadien-Einheiten enthalten, aufweist, und das Polymer IIb ein Copolymer aus Vinylidenfluorid und Hexafluorpropylen ist.

Die erfindungsgemäßen Zusammensetzungen können ferner einen Weichmacher III enthalten. Es kann jedoch auch ohne Weichmacher gearbeitet werden.

Sofern vorhanden, beträgt der Anteil des Weichmachers III, bezogen auf die Zusammensetzung, 0,1 bis 100 Gew.-%, vorzugsweise 0,5 bis 50 Gew.-% und insbesondere 1 bis 20 Gew.-%.

Als Weichmacher III können aprotische Lösungsmittel, vorzugsweise solche, die Li-Ionen solvatisieren, wie z.B. Dimethylcarbonat, Ethyl-methyl-carbonat, Diethylcarbonat, Dipropylcarbonat, Diisopropylcarbonat, Dibutylcarbonat, Propylencarbonat; cyclische Carbonate der Summenformel CₙHₙ₊₁O_{y}, n = 2 bis 30, m = 3 bis 7, wie z.B. Ethylencarbonat, 1,2-Propylencarbonat, 1,3-Propylencarbonat, 1,2-Butylencarbonat, 1,3-Butylencarbonat, 1,4-Butylencarbonat, 2,3-Butylencarbonat; Oligoalkylenoxide, wie z.B. Dibutylether, Di-tert.-butylether, Dipentylether, Dihexylether, Diheptylether, Dioctylether, Dinonylether, Didecylether, Didodecylether, Ethylenglycoldimethylether, Ethylenglycoldiethylether, 1-tert.-Butoxy-2-methoxyethan, 1-tert.-Butoxy-2-ethoxyethan, 1,2-Dimethoxypropan, 2-Methoxyethylether, 2-Ethoxyethylether, Diethylenglycoldibutylether, Dimethylenglycol-tert.-butylmethylether, Triethylenglycoldimethylether, Tetraethylenglycoldimethylether, γ-Butyrolacton, Dimethylformamid; Dimethyl-γ-butyrolacton, Diethyl-γ-butyrolacton, γ-Valerolacton, 4,5-Dimethyl-1,3-dioxolan-2-on, 4,4-Dimethyl-1,3-dioxolan-2-on, 4-Ethyl-1,3-dioxolan-2-on, 4-Methyl-5-ethyl-1,3-dioxolan-2-on, 4,5-Diethyl-1,3-dioxolan-2-on, 4,4-Diethyl-1,3-dioxolan-2-on, 1,3-Dioxan-2-on, 4-Methyl-1,3-dioxan-2-on, 5-Methyl-1,3-dioxan-2-on, 4,4-Dimethyl-1,3-dioxan-2-on, 5,5-Dimethyl-1,3-dioxan-2-on, 4,6-Dimethyl-1,3-dioxan-2-on, 4,4,6-Trimethyl-1,3-dioxan-2-on, 5,5-Diethyl-1,3-dioxan-2-on, spiro-(1,3-Oxa-2-cyclohexanon)-5',5',1',3'oxacyclohexan; 4-Dimethyl-ethoxysilyl-1,2-butylencarbonat; Dicarbonsäureester der Formel R¹OCOOR²OCOOR³ (R1, R2, R3 = C₁-C₂₀-Kohlenwasserstoffe), organische Ester der Formel R¹-COOR² (R¹ und R² = C₁-C₂₀-Kohlenwasserstoffe); Kohlenwasserstoffe der allgemeinen Formel CₙH₂ₙ₊₂ mit 7 < n < 50; organische Phosphorverbindungen, insbesondere Phosphate und Phosphonate, wie z.B. Trimethylphosphat, Triethylphosphat, Tripropylphosphat, Tributylphosphat, Triisobutylphosphat, Tripentylphosphat, Trihexylphosphat, Trioctylphosphat, Tris(2-ethylhexyl)phosphat, Tridecylphosphat, Diethyl-nbutylphosphat, Tris(butoxyethyl)phosphat, Tris(2-methoxyethyl)phosphat, Tris(tetrahydrofuryl)phosphat, Tris(1H,1H,5H-octafluorpentyl)phosphat, Tris(1H,1H-trifluorethyl)phosphat, Tris(2-(diethylamino)ethyl)phosphat, Tris-(methoxyethoxyethyl)-phosphat, Tris(methoxyethoxy)trifluorophosphazen, Tris(ethoxycarbonyloxyethyl)-phosphat, Diethylethylphosphonat, Dipropylpropylphosphonat, Dibutylbutylphosphonat, Dihexylhexylphosphonat, Dioctyloctylphosphonat, Ethyldimethylphosphonoacetat, Methyldiethylphosphonoacetat, Triethylphosphonoacetat, Dimethyl(2-oxopropyl)phosphonat, Diethyl(2-oxopropyl)phosphonat, Dipropyl(2-oxopropyl)phosphonat, Ethyldiethoxyphosphinylformiat, Trimethylphosphonoacetat, Triethylphosphonoacetat, Tripropylphosphonoacetat, Tributylphosphonoacetat; organische Schwefelverbindungen, wie z.B. Sulfate, Sulfonate, Sulfoxide, Sulfone und Sulfite, wie z.B. Dimethylsulfit, Diethylsulfit, Glycolsulfit, Dimethylsulfon, Diethylsulfon, Diethylpropylsulfon, Dibutylsulfon, Tetramethylensulfon, Methylsulfolan, Dimethylsulfoxid, Diethylsulfoxid, Dipropylsulfoxid, Dibutylsulfoxid, Tetramethylensulfoxid, Ethylmethansulfonat, 1,4-Butandiolbis(methansulfonat), Diethylsulfat, Dipropylsulfat, Dibutylsulfat, Dihexylsulfat, Dioctylsulfat, SO₂ClF;
Nitrile, wie z.B. Acrylnitril;
Dispergatoren, insbesondere mit Tensidstruktur;
sowie deren Gemische
verwendet werden.

Darüberhinaus können ganz allgemein geeignete organische Verbindungen, wie z.B. Alkane CₙHₓF_{y} mit n = 5 bis 30, x+y = 2n+2; Ether CₙHₓF_{y}O_{z} mit n = 5 bis 30, x+y = 2n+2, z = 1 bis 14; Ketone CₙHₓF_{y}O mit n = 5 bis 30, x+y = 2n; Ester CₙHₓF_{y}O₂ mit n = 5 bis 30, x+y = 2n; Carbonate CₙHₓF_{y}O₃ mit n = 5 bis 30, x+y = 2n; Lactone CₙHₓF_{y}O₂ mit n = 5 bis 20, x+y = 2n-2; cyclische Carbonate CₙHₓF_{y}O₃ mit n = 5 bis 20, x+y = 2n-2; und Borsäureester mit
- R₁-R₄ =: C₁-C₁₀-Kohlenwassestoffe und
- X =: C₁-C₁₀-Kohlenwassestoffe, Si(CH₃)₂
- m =: 1 oder 2 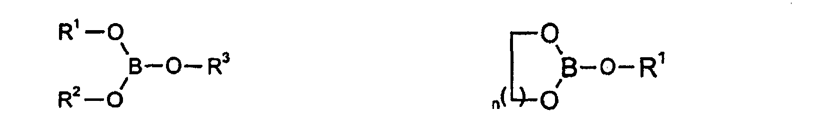 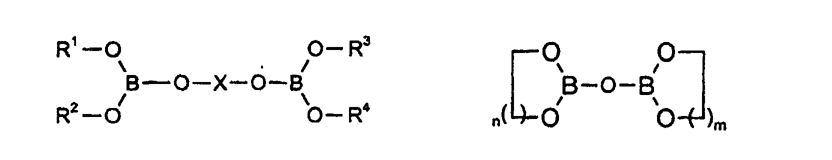 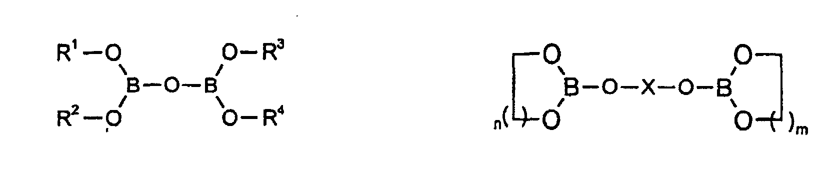
insbesondere Trimethylborat, Triethylborat, Tripropylborat, Tributylborat, Trimethylenborat, 2-Methyl-1,3,2-dioxaborinan, 2-Ethyl-1,3,2-dioxaborinan, 2-Propyl-1,3,2-dioxaborinan, 2-Butyl-1,3,2-dioxaborinan, 2-Phenyl-1,3,2-dioxaborinan als Weichmacher V eingesetzt werden.

Ferner können mindestens ein Ester der Formeln (E1) bis (E5), wie nachstehend dargestellt als Weichmacher (III) verwendet werden: 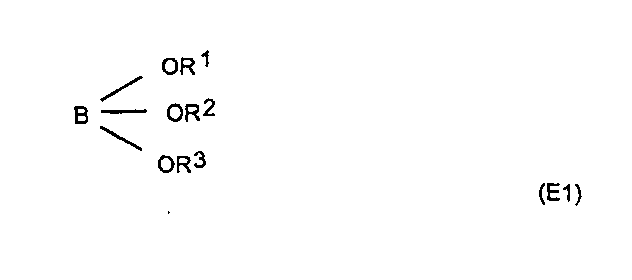 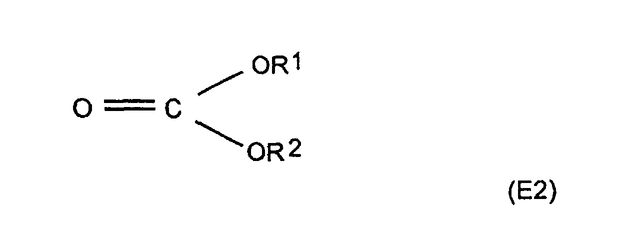 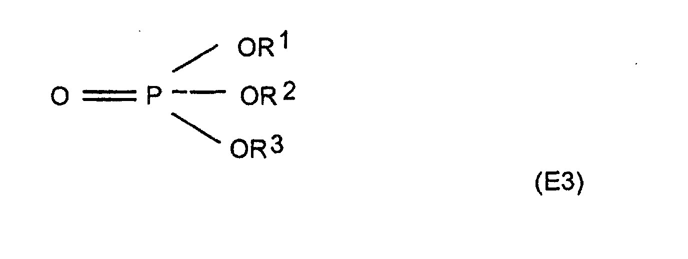 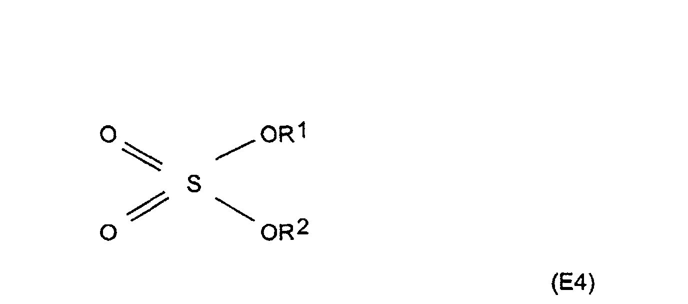 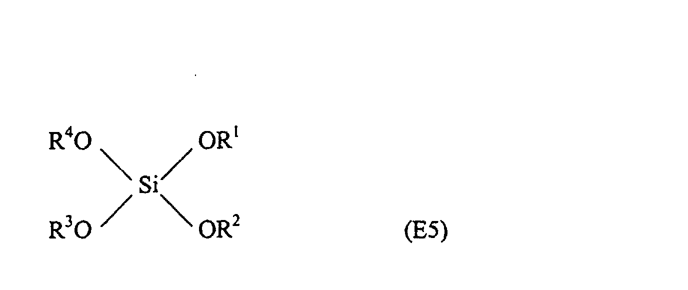 wobei R¹, R², R³, R⁴ gleich oder verschieden sind und jeweils unabhängig voneinander eine lineare oder verzweigkettige C₁- bis C₄-Alkylgruppe, (-CH₂-CH₂-O)ₙ-CH₃ mit n=1 bis 3, eine C₃- bis C₆-Cycloalkylgruppe, eine aromatische Kohlenwasserstoffgruppe, die wiederum substituiert sein kann, ist, mit der Maßgabe, daß mindestens eine der Gruppen R¹, R², R³ und R⁴ (-CH₂-CH₂-O)ₙ-CH₃ mit n=1 bis 3 ist.

Unter den obengenannten Estern der Formeln (E1) bis (E5) werden die Phosphorsäureester der Formel (E3) bevorzugt eingesetzt.

Beispiele für die Gruppen R¹, R² und - sofern vorhanden - R³ und/oder R⁴ sind die Methyl-, Ethyl-, n- und iso-Propyl-, n- und tert.-Butyl-, Cyclopentyl-, Cyclohexyl- sowie die Benzyl-Gruppe, sowie (-CH₂-CH₂-O)ₙ-CH₃ mit n=1 bis 3, wobei jedoch, wie bereits oben erwähnt, zu beachten ist, daß mindestens eine der Gruppen R¹, R², R³ und R⁴ (CH₂-CH₂-O)ₙ-CH₃ mit n=1 bis 3, vorzugsweise 1 oder 2, ist.

Weiter bevorzugt werden Ester der allgemeinen Formeln (E1) bis (E5) eingesetzt, in denen R¹, R² und - sofern vorhanden - R³ und/oder R⁴ gleich sind und -CH₂-CH₂O-CH₃ oder (-CH₂-CH₂-O)₂-CH₃ bedeuten, wobei auch hier wiederum die entsprechenden Phosphorsäureester bevorzugt sind.

Beispiele für besonders bevorzugt verwendete Verbindungen stellen die Verbindungen der Formeln (E1a) bis (E5a) dar:

B(―OCH₂ ―CH₂OCH₃)₃ (E1a)

O=C(―OCH₂CH₂OCH₃)₂ (E2a)

O=P(―O―CH₂―CH₂―O―CH₃)₃ (E3a)

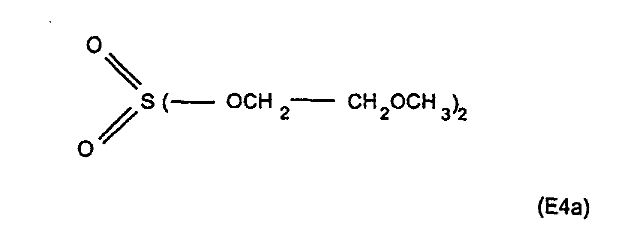

und

Si(-O-CH₂-CH₂-OCH₃)₄ (E5a)

Die hierin beschriebenen Ester sind bezüglich ihrer Eigenschaften außerordentlich gut als Weichmacher in den Folien geeignet und weisen im allgemeinen eine Viskosität bei Raumtemperatur von ≤ 10 mPas, vorzugsweise ≤ 5 mPas und insbesondere ≤ 3 mPas auf. Sie besitzen Siedepunkte von im allgemeinen ungefähr 200 °C oder höher, vorzugsweise ungefähr 250°C oder höher und insbesondere ungefähr 300°C oder höher, jeweils gemessen bei Atmosphärendruck und weisen bei den bei ihrer Verwendung auftretenden Temperaturen von ca. -50°C bis ca. 150°C einen ausreichend niedrigen Dampfdruck von ungefähr 10⁻⁵ bis ungefähr 10° auf. Bedingt durch ihre Siedepunkte sind sie destillierbar und können somit bei ihrer Herstellung in hoher Reinheit erhalten werden. Darüber hinaus sind diese Ester über einen weiten Temperaturbereich hinweg bei Atmosphärendruck flüssig, wobei sie im allgemeinen bis zu einer Temperatur von ungefähr -30 °C, vorzugsweise bis zu ungefähr -40°C, noch flüssig sind. Die hier beschriebenen Ester können als Lösungsmittel in Elektrolytsystemen für Li-Ionen-Akkus bei mindestens ungefähr 80 °C, vorzugsweise bei mindestens ungefähr 120 °C, weiter bevorzugt bei mindestens ungefähr 150°C eingesetzt werden.

Selbstverständlich können die erfindungsgemäß verwendeten Ester auch als Gemisch mit den vorstehend erwähnten Weichmachern eingesetzt werden.

Bevorzugt sind Lösungsmittelkombinationen, die eine ausreichend geringe Viskosität besitzen, in der Lage sind, die Ionen der Leitsalze stark zu solvatisieren, über einen weiten Temperaturbereich hinweg flüssig sind und in ausreichender Weise elektrochemisch und chemisch stabil sowie hydrolysebeständig sind.

Die erfindungsgemäß verwendeten Ester werden nach herkömmlichen Verfahren, wie sie beispielsweise in K. Mura Kami in Chem. High Polymers (Japan), 7, S. 188-193 (1950) und in H. Steinberg Organoboron Chemistry, Kapitel 5, J. Wiley&Sons, N.Y. 1964 beschrieben sind hergestellt. Dabei wird im allgemeinen von den den Estern zugrundeliegenden Säuren, Säureanhydriden oder Chloriden, wie z.B. Borsäure, C(O)Cl₂, POCl₃, SO₂Cl₂ und SiCl₄ ausgegangen und diese in bekannter Weise mit den entsprechenden einoder mehrwertigen Alkoholen oder Etherolen umgesetzt.

Die erfindungsgemäßen Zusammensetzungen können in einem anorganischen oder organischen, vorzugsweise einem organischen flüssigen Verdünnungsmittel gelöst oder dispergiert werden, wobei die erfindungsgemäße Mischung eine Viskosität von vorzugsweise 100 bis 50.000 mPas aufweisen sollte, und anschließend in an sich bekannter Weise, wie Spritzbeschichtung, Gießen, Tauchen, Spincoaten, Walzenbeschichtung, Bedrucken im Hoch-, Tief- oder Flachdruck oder Siebdruckverfahren, auf ein Trägermaterial aufgetragen werden. Die weitere Verarbeitung kann wie üblich erfolgen, z.B. durch Entfernen des Verdünnungsmittels und Aushärten der Mischung.

Als organische Verdünnungsmittel eignen sich aliphatische Ether, insbesondere Tetrahydrofuran und Dioxan, Kohlenwasserstoffe, insbesondere Kohlenwasserstoffgemische wie Benzin, Toluol und Xylol, aliphatische Ester, insbesondere Ethylacetat und Butylacetat und Ketone, insbesondere Aceton, Ethylmethylketon und Cyclohexanon, sowie DMF und NMP. Es können auch Kombinationen solcher Verdünnungsmittel eingesetzt werden.

Als Trägermaterial kommen die üblicherweise für Elektroden verwendeten Materialien, vorzugsweise Metalle wie Aluminium und Kupfer, in Betracht. Ebenso können temporäre Zwischenträger, wie Folien, insbesondere Polyesterfolien, wie Polyethylenterephthalatfolien, verwendet werden. Solche Folien können vorteilhaft mit einer Trennschicht vorzugsweise aus Polysiloxanen versehen sein.

Ebenso kann die Herstellung der Festelektrolyte und Separatoren thermoplastisch beispielsweise durch Spritzgießen, Schmelzgießen, Pressen, Kneten oder Extrudieren gegebenenfalls mit anschließendem Kalandrierschritt der erfindungsgemäßen Mischung erfolgen.

Nach der Filmbildung der erfindungsgemäßen Mischung können flüchtige Komponenten, wie Lösungsmittel oder Weichmacher, entfernt werden.

Die Vernetzung der erfindungsgemäßen Zusammensetzung kann in an sich bekannter Weise erfolgen, beispielsweise durch Bestrahlung mit ionischer oder ionisierender Strahlung, Elektronenstrahl, vorzugsweise mit einer Beschleunigungsspannung zwischen 20 und 2.000 kV und einer Strahlendosis zwischen 5 und 50 Mrad, UV- oder sichtbarem Licht, wobei ein Initiator wie Benzildimethylketal oder 1,3,5-Trimethylbenzoyltriphenylphosphinoxid in Mengen von insbesondere höchstens 1 Gew.-% bezogen auf das Polymer IIa zugegeben und die Vernetzung innerhalb von im allgemeinen 0,5 bis 15 Minuten durchgeführt werden kann, jedoch nicht zwingend notwendig ist, da die hier eingesetzten Systeme im allgemeinen selbstvernetzend sind; durch thermische Vernetzung über radikalische Polymersation, vorzugsweise bei Temperaturen von über 60 °C, wobei man vorteilhaft einen Initiator wie Azo-bis-isobutyronitril in Mengen von im allgemeinen höchstens 5 Gew.-%, vorzugsweise 0,05 bis 1 Gew.-% bezogen auf das Polymer IIa zugeben kann; durch elektrochemisch induzierte Polymerisation; oder durch ionische Polymerisation erfolgen, beispielsweise durch säurekatalysierte kationische Polymerisation, wobei als Katalysator in erster Linie Säuren, vorzugsweise Lewissäuren wie BF₃, oder insbesondere LiBF₄ oder LiPF₆ in Betracht kommen. Lithiumionen enthaltende Katalysatoren wie LiBF₄ oder LiPF₆ können dabei vorteilhaft im Festelektrolyt oder Separator als Leitsalz verbleiben.

Die oben beschriebene Vernetzung kann, muß aber nicht, unter Inertgas erfolgen.

Soll die erfindungsgemäße Zusammensetzung als Festelektrolyt oder Separator in einer elektrochemischen Zelle eingesetzt werden, werden eine dissoziierbare, Lithiumkationen enthaltende Verbindung, ein sogenanntes Leitsalz, und ggf. weitere Zusatzstoffe, wie insbesondere organische Lösungsmittel, ein sogenannter Elektrolyt, inkorporiert.

Diese Stoffe können teilweise oder vollständig bei der Herstellung der Schicht der Zusammensetzung beigemischt oder nach der Herstellung der Schicht in die Schicht eingebracht werden.

Als Leitsalze können die allgemein bekannten und beispielsweise in der EP-A 0 096 629 beschriebenen Leitsalze verwendet werden. Vorzugsweise werden erfindungsgemäß als Leitsalz LiPF₆, LiBF₄, LiClO₄, LiAsF₆, LiCF₃SO₃, LiC(CF₃SO₂)₃, LiN(CF₃SO₂)₂, LiN(SO₂CₙF₂ₙ₊₁)₂, LiC[(CₙF₂ₙ₊₁)SO₂]₃, Li(CₙF₂ₙ₊₁)SO₂, mit n jeweils 2 bis 20, LiN(SO₂F)₂, LiAlCl₄, LiSiF₆, LiSbF₆, (RSO₂)ₙXLi (ₙX = ₁O, ₁S, ₂N, ₂P, ₃C, ₃Si; R= CₘF₂ₘ₊₁ mit m = 0-10 oder C₁-C₂₀-Kohlenwasserstoffe), Li-Imidsalze, oder ein Gemisch aus zwei oder mehr davon eingesetzt, wobei als Leitsalz vorzugsweise LiPF₆ eingesetzt wird.

Als organische Elektrolyte kommen die vorstehend unter "Weichmachern" diskutierten Verbindungen in Frage, wobei vorzugsweise die üblichen organischen Elektrolyte, bevorzugt Ester wie Ethylencarbonat, Propylencarbonat, Dimethylcarbonat und Diethylcarbonat oder Gemische solcher Verbindungen eingesetzt werden.

Für elektrochemische Zellen geeignete erfindungsgemäße Festelektrolyte, Separatoren und/oder Elektroden sollten vorteilhaft eine Dicke von 5 bis 500 µm, vorzugsweise 10 bis 500 µm, weiter bevorzugt 10 bis 200 µm und insbesondere 20 bis 100 µm aufweisen.

Die erfindungsgemäßen Zusammensetzungen können in elektrochemischen Zellen als alleiniger Festelektrolyt und/oder Separator und/oder Elektrode oder im Gemisch mit anderen Festelektrolyten, Separatoren und/oder Elektroden eingesetzt werden, wobei die Verwendung als Festelektrolyt bevorzugt ist.

Ferner betrifft die vorliegende Erfindung einen insbesondere in elektrochemischen Zellen verwendbaren Verbundkörper, vorzugsweise in Form einer Folie, weiter bevorzugt in Form einer Folie mit einer Gesamtdicke von 15 bis 1500 µm, insbesondere mit einer Gesamtdicke von 50 bis 500 µm, umfassend mindestens eine erste Schicht, die eine oben definierte Zusammensetzung enthält, die eine Verbindung Ib oder eine Verbindung Ic umfaßt, und mindestens eine zweite Schicht, die eine oben definierte Zusammensetzung enthält, die einen Feststoff Ia umfaßt und frei ist von den Verbindungen Ic und Ib. Dieser Verbundkörper kann auch mit herkömmlichen Elektroden, z.B. einer Anode aus Graphit kombiniert werden. Die oben definierte erste Schicht enthält dann eine Verbindung Ib, so daß folgendes Element entsteht:
Anode (konventionell) / zweite Schicht (Separator) / erste Schicht (Kathode)

Ferner beschreibt die vorliegende Erfindung ein Verfahren zur Herstellung eines derartigen Verbundkörpers, das die folgenden Stufen umfaßt:
(I) Herstellen mindestens einer ersten Schicht, wie oben definiert;
(II) Herstellen mindestens einer zweiten Schicht, wie oben definiert; und
(III) anschließendes Zusammenbringen der mindestens einen ersten Schicht mit der mindestens einen zweiten Schicht durch ein herkömmliches Beschichtungsverfahren.

Vorzugsweise wird die mindestens eine zweite Schicht auf einem temporären Träger hergestellt. Dabei können erfindungsgemäß üblicherweise verwendete temporäre Träger, wie z.B. eine Trennfolie aus einem Polymer oder einem vorzugsweise beschichteten Papier, wie z.B. eine silikonisierte Polyesterfolie eingesetzt werden. Die Herstellung dieser zweiten Schicht ist jedoch auch auf einem permanenten Träger, wie z.B. einer Ableiterelektrode oder aber auch ganz ohne Träger möglich.

Das Zusammenbringen bzw. die Herstellung der oben definierten Schichten erfolgt durch drucklose Verfahren zur Beschichtung bzw. Herstellung von Folien, wie z.B. Gießen oder Rakeln, sowie durch Verarbeitungsverfahren unter Druck, wie z.B. Extrudieren, Laminieren, Kaschieren, Kalandrieren oder Pressen. Infolge der Selbstvemetzbarkeit des erfindungsgemäß verwendeten Polymers IIa ist eine Stufe, in der nach dem Zusammenbringen, z.B. durch Heißlaminieren, vernetzt wird, nicht notwendig. Sofern eine Vernetzung nach dem Heißlaminieren vorgesehen ist, kann der erhaltene Verbundkörper durch Strahlung, elektrochemisch oder thermisch vernetzt bzw. gehärtet werden.

Wie sich aus obigem ergibt, ist es somit ohne weiteres möglich einen Verbundkörper mit den Bestandteilen Trennfolie/Separator (zweite Schicht)/ Elektrode (erste Schicht) bereitzustellen.

Femer ist es möglich durch doppelseitige Beschichtung einen Verbundkörper mit den Bestandteilen Anode/Separator/Kathode zur Verfügung zu stellen.

Dabei wird beispielsweise so vorgegangen:

Zunächst werden eine erste Verbindung Ic, wie z.B. Graphite, Leitruß, ein polymeres Bindemittel II, ein Leitsalz und ein Weichmacher, z.B. Propylencarbonat, miteinander vermischt und das resultierende Gemisch auf eine Ableiterelektrode gegossen und anschließend durch UV-Licht bestrahlt (Komponente 1). Anschließend wird ein Kathodenmaterial, z.B. LiMn₂O₄, auf eine mit Leitruß beschichtete Ableiterelektrode gebracht und darauf ein Gemisch aus der erfindungsgemäßen Zusammensetzung, die einen Feststoff Ia enthält und frei ist von Verbindungen Ib und Ic, einem Leitsalz und einem Weichmacher gegossen. Auch dieser Verbund wird anschließend durch UV-Licht bestrahlt (Komponente 2). Durch Zusammenbringen der beiden oben beschriebenen Komponenten wird ein Verbundkörper erhalten, der in Verbindung mit einem beliebigen Fest- und/oder Flüssigelektrolyt als elektrochemische Zelle verwendet werden kann.

Ein Verbund Festelektrolyt/Anode bzw. Festelektrolyt/Kathode oder auch Kathode/Festelektrolyt/Anode kann ohne weitere Zusatzstoffe dadurch hergestellt werden, daß die Separatorfolie und mit der Anodenfolie und/oder Kathodenfolie zusammen bei Temperaturen > 80°C laminiert werden. Dabei ist es ohne weiteres möglich, z.B. eine erfindungsgemäße Zusammensetzung, die einen Feststoff Ia umfaßt, auf eine herkömmliche Anode oder Kathode zu laminieren, wobei ein Verbund Anode oder Kathode/Feststoffelektrolyt (Separator) erhalten wird, der dann wiederum mit einer herkömmlichen Kathode oder Anode kombiniert werden kann.

Ein wie oben beschriebener Verbundkörper Anode/Separator/Kathode kann auch ohne die Verwendung eines Trägers bzw. der Ableiterelektroden hergestellt werden, da der erhaltene Verbundkörper bestehend aus einer ersten und einer zweiten Schicht, wie oben definiert, an sich eine für die Verwendung in elektrochemischen Zellen ausreichende mechanische Stabilität besitzt.

Somit sind mit der erfindungsgemäßen Zusammensetzung folgende Konfigurationen möglich.

| **Kathode** | **Festelektrolyt/ Separator** | **Anode** |
|---|---|---|
| Konventionell | Zusammensetzung gem. Erfindung | konventionell |
| Zusammensetzung gem. Erfindung | Zusammensetzung gem. Erfindung | Zusammensetzung gem. Erfindung |
| Zusammensetzung gem. Erfindung | Zusammensetzung gem. Erfindung | konventionell |
| Konventionell | Zusammensetzung gem. Erfindung | Zusammensetzung gem. Erfindung |
| Konventionell | konventionell | Zusammensetzung gem. Erfindung |
| Zusammensetzung gem. Erfindung | konventionell | konventionell |

Die Befüllung derartiger Verbundkörper mit einem Elektrolyt und Leitsalz kann sowohl vor dem Zusammenbringen als auch vorzugsweise nach dem Zusammenbringen der Schichten, ggf. nach dem Kontaktieren mit geeigneten Ableiterelektroden, z.B. einer Metallfolie und sogar nach dem Einbringen des Verbundkörpers in ein Batteriegehäuse erfolgen, wobei die spezielle mikroporöse Struktur der Schichten bei Verwendung der erfindungsgemäßen Mischung, insbesondere bedingt durch die Anwesenheit des oben definierten Feststoffs im Separator und ggf. in den Elektroden, das Aufsaugen des Elektrolyten und des Leitsalzes und die Verdrängung der Luft in den Poren ermöglicht. Das Befüllen kann bei Temperaturen von 0 °C bis ungefähr 100°C in Abhängigkeit vom verwendeten Elektrolyt durchgeführt werden.

Die erfindungsgemäßen elektrochemischen Zellen können insbesondere als Bord-, Auto-, Geräte- oder Flachbatterie, sowie als Batterie für statische Anwendungen und als Batterie für Elektrotraktion verwendet werden.

Wie sich aus obigem ergibt, betrifft die vorliegende Erfindung auch die Verwendung der erfindungsgemäßen Zusammensetzung oder des oben beschriebenen Verbundkörpers zur Herstellung eines Festelektrolyten, eines Separators, einer Elektrode, in einem Sensor, einem elektrochromen Fenster, einem Display, einem Kondensator oder einer ionenleitenden Folie, sowie einen Festelektrolyt, einen Separator, eine Elektrode, einen Sensor, ein elektrochromes Fenster, ein Display, einen Kondensator oder eine ionenleitende Folie, die jeweils die erfindungsgemäße Mischung oder den oben beschriebenen Verbundkörper enthalten.

Ferner betrifft sie eine elektrochemische Zelle, umfassend einen Festelektrolyt, Separator oder eine Elektrode, wie oben definiert, oder eine Kombination aus zwei oder mehr davon, sowie die Verwendung der oben definierten elektrochemischen Zelle als Autobatterie, Gerätebatterie oder Flachbatterie.

Die erfindungsgemäße Zusammensetzung weist gegenüber den bislang fiir den Einsatz in elektrochemischen Zellen vorgesehenen Systemen die folgenden Vorteile auf:
- Der Photovernetzungsschritt bei der Herstellung der Gießfolie, sofern er überhaupt durchgeführt wird, erfordert keine Inertgasbedingungen;
- die mechanischen Eigenschaften der aus der Zusammensetzung resultierenden Folien können bereits über die Zusammensetzung des Polymers IIa von hart/spröde bis weich/elastisch gesteuert werden;
- durch das Vorhandensein des Polymers IIb ist die resultierende Folie thermoplastisch und kann thermisch ohne Zugabe weiterer Hilfsmittel direkt auf die aktiven Elektroden Iaminiert werden.

Ferner betrifft die vorliegende Erfindng auch die Verwendung eines Polymers IIa, wie oben definiert, als Vernetzersystem in einem Festelektrolyt, einem Separator oder einer Elektrode.

Die vorliegende Erfindung soll nunmehr noch anhand einiger Beispiele erläutert werden.

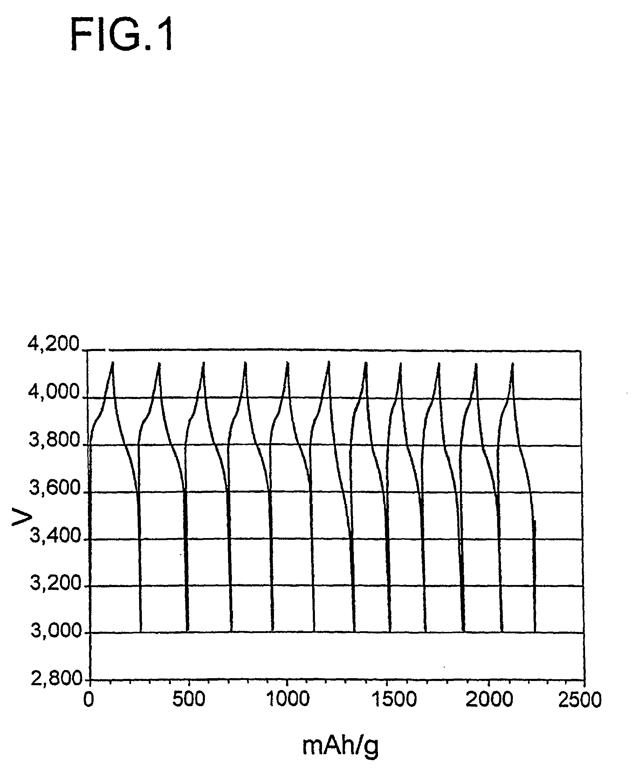

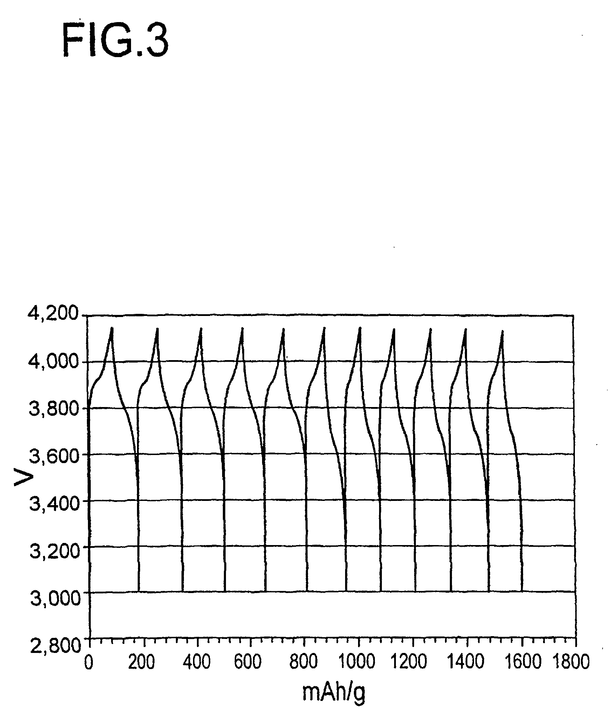

Dabei stellen die Figuren 1 bis 3 jeweils die Ergebnisse der Zyklisierung (Spannung: 4,15V) der gemäß Beispiel 1 bis 3 erhaltenen elektrochemischen Zellen dar.

### Herstellungsbeispiel 1 (PA1)

Zunächst wurden 800 g Xylol vorgelegt und auf 85°C erwärmt.
Anschließend wurden ein Zulauf I, bestehend aus einem Gemisch aus

| | |
|---|---|
| 100 g | Laurylacrylat, |
| 300 g | Dihydrodicyclopentadienylacrylat, |
| 120 g | Glycidylmethacrylat, |
| 480 g | Ethylhexylacrylat und |
| 2 g | Mercaptoethanol, und |

ein Zulauf II, bestehend aus

| | |
|---|---|
| 30 g | Wako V 59 (Azostarter V 59) und |
| 200 g | Xylol |

gleichzeitig gestartet.

Zulauf I wurde innerhalb von 1,5 Stunden und Zulauf II innerhalb von 2 Stunden in die Vorlage zugefahren. Dabei wurde die Temperatur zwischen 80 und 90°C gehalten. Anschließend ließ man 3 Stunden lang bei 90°C nachreagieren.

Danach wurde eine Zugabe, bestehend aus

| | |
|---|---|
| 166 g | 4-Hydroxybenzophenon und |
| 0,83 g | Dimethylaminopyridin |

zugesetzt. Man ließ 2 bis 3 Stunden weiter reagieren bis ein Epoxid-Wert von < 0,01 erreicht war.

### Herstellungsbeispiel 2 (PA2)

Zunächst wurden 660 g Xylol vorgelegt und auf 85°C erhitzt. Anschließend wurden ein Zulauf I, bestehend aus

| | |
|---|---|
| 200 g | Dihydrodicyclopentadienylacrylat |
| 80 g | Glycidylmethacrylat und |
| 580 g | Ethylhexylacrylat |

und
ein Zulauf II, bestehend aus

| | |
|---|---|
| 30 g | Wako V 59 (Azostarter V 59) und |
| 200 g | Xylol |

gleichzeitig in die Vorlage innerhalb von 1,5 Stunden (Zulauf I) und innerhalb von 2 Stunden (Zulauf II) zugefahren. Dabei wurde die Temperatur bei 80 bis 90°C gehalten.

Anschließend ließ man 3 Stunden lang bei 90°C nachreagieren. Anschließend wurde mit einer Zugabe bestehend aus

| | |
|---|---|
| 110,67 g | 4-Hydroxybenzophenon und |
| 0,83 g | Dimethylamonopyridin, |

zugesetzt. Danach ließ man 2 bis 3 Stunden lang weiter reagieren, bis ein Epoxid-Wert von < 0,01 erreicht wurde.

### Beispiel 1

20 g eines Methacrylsilan hydrophobierten Wollastonit (Tremin® 283-600 MST) wurden in 15 g Aceton dispergiert. Anschließend wurden 54 g einer Lösung von 6 g eines Vinylidenfluorid-Hexafluorpropylen-Copolymers (Kynarflex® 2801, Firma ELF-Atochem) und eine Lösung von 4,6 g des gemäß Herstellungsbeispiels 1 hergestellten PA1 in 34 g Xylol zugegeben. Abschließend wurden noch 2,8 g Tris-(2-ethylhexyl)phosphat zugegeben.

Anschließend wurde die so erhaltene Zusammensetzung mit einem Rakel mit einem Gießspalt von 500 µm auf ein Trägermaterial bei 60°C aufgetragen, die Lösungsmittel innerhalb von 5 min entfernt und nach dem Abziehen der getrockneten Beschichtung ein ungefähr 30 µm dicker Film erhalten. Dieser wurde durch 10-minütige Belichtung bei 5 cm Abstand unter einem Feld aus superaktinischen Leuchtstoffröhren (TL 09, Firma Philips) photovernetzt.

Der so erhaltene Film wurde als Feststoffelektrolyt verwendet und zusammen mit LiCoO₂ als Kathode und Graphit als Anode zu einer runden "Sandwich"-Zelle zusammengebaut. Unter Verwendung von LiPF₆ als Leitsalz und einem 1:1-Gemisch aus Ethylencarbonat und Diethylencarbonat als Flüssigelektrolyt wurde eine elektrochemische Zelle erhalten, die unter Anlegen einer Spannung von 4,15V zyklisiert wurde.

Die mit dieser Zelle erreichten spezifischen Batteriedaten ergaben sich wie folgt:

### Batterietest

Kathodenfläche: 1 cm²
Anodenfläche: 1 cm²
Flächengewicht Kathode: 263,6 g/m²
Elektrolyt: IM LiPF₆/ Ethylencarbonat (EC):Diethylencarbonat (DEC) = 1:1

**Fig. 1**

| **Zyklus Nr.** | **Halb-Zykluse** | **Stromdichte *[mA*/*cm***^{***2***}***]*** | **spezifische Kapazität [mAh/g]** | |
|---|---|---|---|---|
| | | | **Ladung** | **Entladung** |
| 1 | c (Li raus) | 0.5 | 118,8 | |
| | d (Li rein) | -1.0 | | 110,2 |
| 2 | c (Li raus) | 0.5 | 109,0 | |
| | d (Li rein) | -1.0 | | 109,5 |
| 3 | c (Li raus) | 0.5 | 107,9 | |
| | d (Li rein) | -1.0 | | 108,7 |
| 4 | c (Li raus) | 0.5 | 106,7 | |
| | d (Li rein) | -1.0 | | 107,5 |
| 5 | c (Li raus) | 0.5 | 105,5 | |
| | d (Li rein) | -1.0 | | 106,4 |
| 6 | c (Li raus) | 0.5 | 103,4 | |
| | c (Li raus) | 0.25 | 4,6 | |
| | d (Li rein) | -2.0 | | 100,0 |
| 7 | c (Li raus) | 1.0 | 85,5 | |
| | d (Li rein) | -2.0 | | 91,5 |
| 8 | c (Li raus) | 1.0 | 89,6 | |
| | d (Li rein) | -2.0 | | 89,9 |
| 9 | c (Li raus) | 1.0 | 88,4 | |
| | d (Li rein) | -2.0 | | 88,4 |
| 10 | c (Li raus) | 1.0 | 87,4 | |
| | d (Li rein) | -2.0 | | 87,3 |
| 11 | c (Li raus) | 1.0 | 86,8 | |
| | d (Li rein) | -2.0 | | 86,8 |

Die Ergebnisse dieser Zyklisierung sind in Fig. 1 dargestellt. Wie sich daraus ergibt, besaß diese Zelle bei z.B. der 5. Zyklisierung eine spezifische Ladekapazität an der Kathode von 106,4 mAh/g.

### Beispiel 2

Es wurde ein Film analog Beispiel 1 unter Verwendung von PA1 als Vernetzersystem hergestellt, wobei jedoch gemäß Beispiel 2 ein Film einer Dicke von 40 µm erhalten wurde.

Der so erhaltene Film wurde als Feststoffelektrolyt verwendet und zusammen mit LiCoO₂ als Kathode und Graphit als Anode zu einer runden sandwichartigen Druckflachzelle (600 N/10 cm² Betriebsdruck) zusammengebaut. Unter Verwendung von LiPF₆ als Leitsatz und einem 1:1-Gemisch aus Ethylencarbonat und Diethylencarbonat als Flüssigelektrolyt wurde unter einer Spannung von ca. 4,15 V zyklisiert.

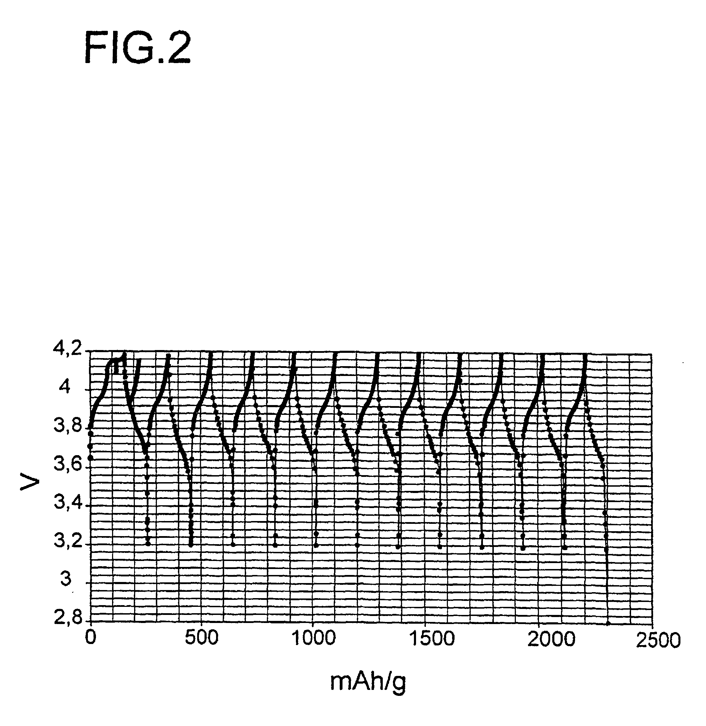

Die entsprechenden Ergebnisse dieser Zyklisierung sind in Fig. 2 gezeigt.

Bei der 5. Zyklisierung wurde fiir diese Zelle eine spezifische Ladekapazität an der Kathode von ca. 93 mAh/g erhalten.

### Beispiel 3

Es wurde in gleicher Weise wie in Beispiel 1 eine erfindungsgemäße Zusammensetzung hergestellt, wobei diesmal eine Lösung von 5 g PA2 in 32 g Xylol eingesetzt wurde. Femer wurden 2,1 g Tris(2-ethyl-hexyl)phosphat verwendet.

Aus dieser Zusammensetzung wurde in gleicher Weise wie in Beispiel 1 ein Film hergestellt, aus diesem wiederum in gleicher Weise wie in Beispiel 1 eine elektrochemische "Sandwich"-Zelle erhalten wurde.

Diese wurde in gleicher Weise wie die gemäß Beispiel 1 erhaltene Zelle getestet.

Die mit dieser Zelle erreichten spezifischen Batteriedaten ergaben sich wie folgt:

### Batterietest

Kathodenfläche: 1 cm²
Anodenfläche: 1 cm²
Flächengewicht Kathode: 263,6 g/m²
Elektrolyt: 1M LiPF₆ / Ethylencarbonat (EC):Diethylencarbonat (DEC) = 1:1

| **Zyklus Nr.** | **Halb-Zykluse** | **Stromdichte *[mA*/*cm***^{***2***}***]*** | **spezifische Kapazität [mAh/g]** | |
|---|---|---|---|---|
| | | | **Ladung** | **Entladung** |
| 1 | c (Li raus) | 0.5 | 99,7 | |
| | d (Li rein) | -1.0 | | 81,2 |
| 2 | c (Li raus) | 0.5 | 87,2 | |
| | d (Li rein) | -1.0 | | 80,5 |
| 3 | c (Li raus) | 0.5 | 81,7 | |
| | d (Li rein) | -1.0 | | 67,5 |
| 4 | c (Li raus) | 0.5 | 80,7 | |
| | d (Li rein) | -1.0 | | 76,1 |
| 5 | c (Li raus) | 0.5 | 79,5 | |
| | d (Li rein) | -1.0 | | 75,1 |
| 6 | c (Li raus) | 0.5 | 76,7 | |
| | c (Li raus) | 0.25 | 4,1 | |
| | d (Li rein) | -2.0 | | 70,3 |
| 7 | c (Li raus) | 1.0 | 60,6 | |
| | d (Li rein) | -2.0 | | 63,6 |
| 8 | c (Li raus) | 1.0 | 68,1 | |
| | d (Li rein) | -2.0 | | 67,0 |
| 9 | c (Li raus) | 1.0 | 68,6 | |
| | d (Li rein) | -2.0 | | 67,0 |
| 10 | c (Li raus) | 1.0 | 67,8 | |
| | d (Li rein) | -2.0 | | 66,2 |
| 11 | c (Li raus) | 1.0 | 68,1 | |
| | d (Li rein) | -2.0 | | 66,2 |
| Entladekapazität (5. Zyklus): 75 mAh/g | | | | |
| Entladekapazität (11. Zyklus): 66 mAh/g | | | | |
| Entladerate (3,0 mA/cm²): 87% | | | | |

## Patentansprüche

1. Zusammensetzung enthaltend:
(a) 1 bis 99 Gew.- % eines Pigments (I) mit einer Primärpartikelgröße von 5 nm bis 100 µm, das ein Feststoff Ia oder eine als Kathodenmaterial in elektrochemischen Zellen wirkende Verbindung Ib der eine als Anodenmaterial in elektrochemischen Zellen wirkende Verbindung Ic oder ein Gemisch des Feststoffs Ia mit der Verbindung Ib oder der Verbindung Ic ist,
(b) 1 bis 99 Gew.- % eines polymeren Materials (II), das umfaßt:
(IIa) 1 bis 100 Gew.-% eines Polymers oder Copolymers (IIa), das ketten-, end- und/oder seitenständig Reaktivgruppen (RG) aufweist, die thermisch und/oder unter UV-Strahlung zu Vernetzungsreaktionen fähig sind, und
(IIb) 0 bis 99 Gew.-% mindestens eines Polymers oder Copolymers (IIb), das frei ist von Reaktivgruppen RG,
wobei das Polymer IIa ketten-, end- und/oder seitenständig mindestens eine Reaktivgruppe RGa aufweist, die thermisch und/oder unter UV-Strahlung im Triplett angeregten Zustand zur Wasserstoffabstraktion befähigt ist, und ketten-, end- und/oder seitenständig mindestens eine von RGa verschiedene, mit RGa coreaktive Gruppe RGb aufweist, wobei im Durchschnitt aller Polymermoleküle mindestens je eine Gruppe RGa und eine Gruppe RGb vorhanden ist.

2. Zusammensetzung nach Anspruch 1, wobei das Pigment I ein Feststoff Ia ist, der ausgewählt wird aus der Gruppe bestehend aus einem anorganischen Feststoff, ausgewählt aus der Gruppe bestehend aus Oxiden, Mischoxiden, Silicaten, Sulfaten, Carbonaten, Phosphaten, Nitriden, Amiden, Imiden und Carbiden der Elemente der I., II., III. oder IV. Hauptgruppe oder der IV. Nebengruppe des Periodensystems; einem Polymer, ausgewählt aus der Gruppe bestehend aus Polyethylen, Polypropylen, Polystyrol, Polytetrafluorethylen, Polyvinylidenfluorid; Polyamiden; Polyimiden; und einer Feststoffdispersion enthaltend ein derartiges Polymer; und einem Gemisch aus zwei oder mehr davon.

3. Zusammensetzung nach Anspruch 1, wobei das Pigment I eine als Kathodenmaterial in elektrochemischen Zellen wirkende Verbindung Ib ist, die ausgewählt wird aus der Gruppe bestehend aus LiCoO₂, LiNiO₂, LiNiₓ₋ Co_{y}O₂, LiNiₓCo_{y}Al_{z}O₂, mit 0<x,y,z≤1, LixMnO₂ (0<x≤1), LiₓMn₂O₄ (0<x≤2), LiₓMoO₂ (0<x≤2), LiₓMnO₃ (0<x≤1), LiₓMnO₂ (0<x≤2), LiₓMn₂O₄ (0<x≤2), LiₓV₂O₄ (0<x≤2.5), LiₓV₂O₃ (0<x≤3.5), LiₓVO₂ (0<x≤1), LiₓWO₂ (0<x≤1), LiₓWO₃ (0<x≤1), LiₓTiO₂ (0<x≤1), LiₓTi₂O₄ (0<x≤2), LiₓRuO₂ (0<x≤1), LiₓFe₂O₃ (0<x≤2), LiₓFe₃O₄ (0<x≤2), LiₓCr₂O₃ (0<x≤3), LiₓCr₃O₄ (0<x≤3.8), LiₓV₃S₅ (0<x≤1.8) LiₓTa₂S₂ (0<x≤1), LiₓFeS (0<x≤1), LiₓFeS₂ (0<x≤1), LiₓNbS₂ (0<x≤2.4), LiₓMoS₂ (0<x≤3), LiₓTiS₂ (0<x≤2), LiₓZrS₂ (0<x≤2), LiₓNbSe₂ (0<x≤3), LiₓVSe₂ (0<x≤1), LiₓNiPS₂ (0<x≤1,5), LiₓFePS₂ (0<x≤1,5), LiNiₓB₁₋ₓO₂ (0 < x < 1), LiNiₓAl₁₋ₓO₂ (0 < x < 1), LiNiₓMg₁₋ₓO₂ (0 < x < 1), LiNiₓCo₁₋ₓVO₄ (1 ≥ x ≥ 0), LiNiₓCo_{y}Mn_{z}O₂ (x+y+z = 1), LiFeO₂, LiCrTiO₄, LiₐM_{b}L_{c}O_{d} (1,15 ≥ a > 0; 1,3 ≥ b+c ≥ 0,8; 2,5 ≥ d ≥1,7; M = Ni, Co, Mn; L = Ti, Mn, Cu, Zn, Erdalkalimetalle), LiCu_{X}^{II}Cu_{Y}^{III}Mn_{(2-(x+y))}O₄ (2 > x+y ≥ 0), LiCrTiO₄, LiGaₓMn₂₋ₓO₄ (0,1 ≥ x ≥ 0), Polycarbonsulfide der allgemeinen Struktur: -[C(Sₓ)]ₙ-, V₂O₅, einem Gemisch aus zwei oder mehr davon, und einem Gemisch der Verbindung Ib mit dem Feststoff Ia; und die Zusammensetzung zusätzlich 0,1 bis 20 Gew.-%, bezogen auf die Gesamtmenge der Komponenten I bis III, Leitruß enthält.

4. Zusammensetzung nach Anspruch 1, wobei das Pigment I eine als Anodenmaterial in elektrochemischen Zellen wirkende Verbindung Ic ist, die ausgewählt wird aus der Gruppe bestehend aus Lithium, einer Lithium enthaltenden Metallegierung, micronisiertem Kohlenstoffruß, natürlichem und synthetischem Graphit, synthetisch graphitiertem Kohlestaub, einer Kohlefaser, Titanoxid, Zinkoxid, Zinnoxid, Molybdänoxid, Wolframoxid, Titancarbonat, Molybdäncarbonat, Zinkcarbonat, LiₓM_{y}SiO_{z} (1 > x ≥ 0, 1 > y ≥ 0, z > 0), Sn₂BPO₄, konjungierten Polymeren, Lithiummetallverbindungen LiₓM und einem Gemisch aus zwei oder mehr davon, und einem Gemisch der Verbindung Ic mit dem Feststoff Ia; und die Zusammensetzung zusätzlich bis zu 20 Gew.-%, bezogen auf die Gesamtmenge der Komponenten I bis III, Leitruß enthält.

5. Zusammensetzung nach einem der Ansprüche 1 bis 4, wobei das Polymer IIa ein Polymer oder Copolymer eines Acrylats oder Methacrylats ist, und Reaktivgruppen RGa, die Benzophenon-Einheiten enthalten, und Reaktivgruppen RGb, die Dihydrodicyclopentadien-Einheiten enthalten, aufweist.

6. Zusammensetzung nach einem der Ansprüche 1 bis 5, wobei das Polymer IIb ausgewählt wird aus der Gruppe bestehend aus einem Polymer oder Copolymer des Vinylchlorids, Acrylnitrils, Vinylidenfluorids; einem Copolymer aus Vinylchlorid und Vinylidenchlorid, Vinylchlorid und Acrylonitril, Vinylidenfluorid und Hexafluropropylen, Vinylidenfluorid mit Hexafluoropropylen; einem Terpolymer aus Vinylidenfluorid und Hexafluorpropylen sowie einem Mitglied der Gruppe bestehend aus Vinylfluorid, Tetrafluorethylen und einem Trifluorethylen.

7. Zusammensetzung nach einem der Ansprüche 1 bis 6, wobei das Polymer IIa ein Polymer wie in Anspruch 6 definiert ist, und das Polymer IIb ein Copolymer aus Vinylidenfluorid und Hexafluorpropylen ist.

8. Verbundkörper, umfassend mindestens eine erste Schicht, die eine Zusammensetzung gemäß einem der Ansprüche 1 bis 7 enthält, die eine Verbindung Ib oder eine Verbindung Ic umfaßt, und mindestens eine zweite Schicht, die eine Zusammensetzung gemäß einem der Ansprüche 1 bis 7 enthält, die einen Feststoff Ia umfaßt und frei ist von den Verbindungen Ic und Ib.

9. Verwendung einer Zusammensetzung gemäß einem der Ansprüche 1 bis 7 oder eines Verbundkörpers gemäß Anspruch 8 zur Herstellung eines Festelektrolyten, eines Separators, einer Elektrode, in einem Sensor, einem elektrochromen Fenster, einem Display, einem Kondensator oder einer ionenleitenden Folie.

10. Festelektrolyt, Separator, Elektrode, Sensor, elektrochromes Fenster, Display, Kondensator oder ionenleitende Folie, jeweils enthaltend eine Zusammensetzung gemäß einem der Ansprüche 1 bis 7 oder ein Verbundkörper gemäß Anspruch 8.

11. Elektrochemische Zelle, umfassend einen Festelektrolyt, Separator oder eine Elektrode gemäß Anspruch 10 oder eine Kombination aus zwei oder mehr davon.

12. Verwendung eines Polymers IIa, wie in einem der Ansprüche 1 und 5 definiert, als Vernetzersystem in einem Festelektrolyt, einem Separator oder einer Elektrode.

## Claims

1. A composition comprising:
(a) from 1 to 99% by weight of a pigment (I) having a primary particle size of from 5 nm to 100 µm which is a solid Ia or a compound Ib which acts as cathode material in electrochemical cells or a compound Ic which acts as anode material in electrochemical cells or a mixture of the solid Ia with the compound Ib or the compound Ic,
(b) from 1 to 99% by weight of a polymeric material (II) which comprises:
(IIa) from 1 to 100% by weight of a polymer or copolymer (IIa) which has, as part of the chain, at the end(s) of the chain and/or laterally on the chain, reactive groups (RG) which are capable of crosslinking reactions under the action of heat and/or UV radiation, and
(IIb) from 0 to 99% by weight of at least one polymer or copolymer (IIb) which is free of reactive groups RG.
wherein the polymer IIa has, as part of the chain, at the end(s) of the chain and/or laterally on the chain, at least one reactive group RGa which in the triplet excited state under the action of heat and/or UV radiation is capable of hydrogen abstraction and has, as part of the chain, at the end(s) of the chain and/or laterally on the chain, at least one group RGb which is different from RGa and is coreactive with RGa, with at least one group RGa and at least one group RGb being present on average over all polymer molecules.

2. A composition as claimed in claim 1, wherein the pigment I is a solid Ia which is selected from the group consisting of an inorganic solid selected from the group consisting of oxides, mixed oxides, silicates, sulfates, carbonates, phosphates, nitrides, amides, imides and carbides of the elements of main groups I., II., III. and IV. and transition group IV. of the Periodic Table; a polymer selected from the group consisting of polyethylene, polypropylene, polystyrene, polytetrafluoroethylene, polyvinylidene fluoride, polyamides and polyimides; and a solids dispersion comprising such a polymer; and a mixture of two or more thereof.

3. A composition as claimed in claim 1, wherein the pigment I is a compound Ib which acts as cathode material in electrochemical cells and is selected from the group consisting of LiCoO₂, LiNiO₂, LiNiₓCo_{y}O₂, LiNiₓCO_{y}Al_{z}O₂, where 0<x,y,z≤1, LiₓMnO₂ (0<x≤1), LiₓMn₂O₄ (0<x≤2), LiₓMoO₂ (0<x≤2), LiₓMnO₃ (0<x≤1), LiₓMnO₂ (0<x≤2), LiₓMn₂O₄ (0<x≤2), LiₓV₂O₄ (0<x≤2.5), LiₓV₂O₃ (0<x≤3.5), LiₓVO₂ (0<x≤1), LiₓWO₂ (0<x≤1), LiₓWO₃ (0<x≤1), LiₓTiO₂ (0<x≤1), LiₓTi₂O₄ (0<x≤2), LiₓRuO₂ (0<x≤1), LiₓFe₂O₃ (0<x≤2), LiₓFe₃O₄ (0<x≤2), LiₓCr₂O₃ (0<x≤3), LiₓCr₃O₄ (0<x≤3.8), LiₓV₃S₅ (0<x≤1.8), LiₓTa₂S₂ (0<x≤1), LiₓFeS (0<x≤1), LiₓFeS₂ (0<x≤1), LiₓNbS₂ (0<x≤2.4), LiₓMoS₂ (0<x≤3), LiₓTiS₂ (0<x≤2), LiₓZrS₂ (0<x≤2), LiₓNbSe₂ (0<x≤3), LiₓVSe₂ (0<x≤1), LiₓNiPS₂ (0<x≤1.5), LiₓFePS₂ (0<x≤1.5), LiNiₓB₁₋ₓO₂ (0<x<1), LiNiₓAl₁₋ₓO₂ (0<x<1), LiNiₓMg₁₋ₓO₂ (0<x<1), LiNiₓCo₁₋ₓVO₄ (1 ≥ x ≥ 0), LiNiₓCo_{y}Mn_{z}O₂ (x+y+z = 1), LiFeO₂, LiCrTiO₄, LiₐM_{b}L_{c}O_{d} (1.15 ≥ a > 0; 1.3≥b+c≥0.8; 2.5≥d≥1.7; M = Ni, Co, Mn; L = Ti, Mn, Cu, Zn, alkaline earth metal), LiCu_{X}^{II}Cu_{Y}^{III}Mn_{(2-(x+y))}O₄ (2>x+y≥0), LiCrTiO₄, LiGaₓMn₂₋ ₓO₄ (0.1≥x≥0), poly(carbon sulfides) of the structure: -[C(Sₓ)]ₙ-, V₂O₅, a mixture of two or more thereof, and a mixture of compound Ib with the solid Ia; and the composition further comprises from 0.1 to 20% by weight, based on the total weight of components I to III, of conductive carbon black.

4. A composition as claimed in claim 1, wherein the pigment I is a compound Ic which acts as anode material in electrochemical cells and is selected from the group consisting of lithium, a lithium-containing metal alloy, micronized carbon black, natural and synthetic graphite, synthetically graphitized carbon powder, a carbon fiber, titanium oxide, zinc oxide, tin oxide, molybdenum oxide, tungsten oxide, titanium carbonate, molybdenum carbonate, zinc carbonate, LiₓM_{y}SiO_{z} (1>x≥0.1>y≥0, z>0), Sn₂BPO₄, conjugated polymers, lithium metal compounds LiₓM and a mixture of two or more thereof and a mixture of the compound Ic with the solid Ia; and the composition further comprises up to 20% by weight, based on the total weight of the components I to III, of conductive carbon black.

5. A composition as claimed in any of claims 1 to 4, wherein the polymer IIa is a polymer or copolymer of an acrylate or methacrylate and has reactive groups RGa which comprise benzophenone units and reactive groups RGb which comprise dihydrodicyclopentadiene units.

6. A composition as claimed in any of claims 1 to 5, wherein the polymer IIb is selected from the group consisting of a polymer or copolymer of vinyl chloride, acrylonitrile, vinylidene fluoride; a copolymer of vinyl chloride and vinylidene chloride, vinyl chloride and acrylonitrile, vinylidene fluoride and hexafluoropropylene, vinylidene fluoride and hexafluoropropylene; a terpolymer of vinylidene fluoride and hexafluoropropylene together with a member of the group consisting of vinyl fluoride, tetrafluoroethylene and a trifluoroethylene.

7. A composition as claimed in any of claims 1 to 6, wherein the polymer IIa is a polymer as defined in claim 6 and the polymer IIb is a copolymer of vinylidene fluoride and hexafluoropropylene.

8. A composite comprising at least one first layer which comprises a composition as claimed in any of claims 1 to 7 comprising a compound Ib or a compound Ic, and at least one second layer which comprises a composition as claimed in any of claims 1 to 7 which comprises a solid la and is free of compounds Ic and Ib.

9. The use of a composition as claimed in any of claims 1 to 7 or a composite as claimed in claim 8 for producing a solid electrolyte, a separator or an electrode or in a sensor, an electrochromic window, a display, a capacitor or an ion-conducting film.

10. A solid electrolyte, separator, electrode, sensor, electrochromic window, display, capacitor or ion-conducting film, in each case comprising a composition as claimed in any of claims 1 to 7 or a composite as claimed in claim 8.

11. An electrochemical cell comprising a solid electrolyte, a separator or an electrode as claimed in claim 10. or a combination of two or more thereof.

12. The use of a polymer IIa as defined in any of claims 1 and 5 as crosslinker system in a solid electrolyte, a separator or an electrode.

## Revendications

1. Composition contenant :
(a) un pigment (I), à raison de 1% à 99% en poids, présentant une granulométrie de particule primaire allant de 5 nm à 100 µm, qui est une matière solide Ia ou un composé Ib employé, en tant que matière constituant la cathode, dans des cellules électrochimiques ou un composé Ic, employé en tant que matière constituant l'anode, dans des cellules électrochimiques, ou bien un mélange constitué de la matière solide Ia et du composé Ib ou du composé Ic,
(b) une matière polymère (II), à raison de 1% à 99% en poids, qui comprend :
(IIa) un polymère ou un copolymère (IIa), à raison de 1% à 100% en poids, qui présente des groupes réactifs (GR) qui sont situés en position terminale, latérale et/ou dans la chaîne et qui sont aptes à une réaction de réticulation par voie thermique ou sous l'effet d'un rayonnement ultraviolet, et
(IIb) au moins un polymère ou un copolymère (IIb), à raison de 0% à 99% en poids, qui est exempt de groupes réactifs (GR),
où le polymère IIa présente au moins un groupe réactif RGa qui est situé en position terminale, latérale et/ou dans la chaîne et qui est, à l'état triplet activé par voie thermique et/ou sous l'effet d'un rayonnement ultraviolet, apte à une abstraction d'hydrogène, et où il présente au moins un groupe GRb, différent du GRa, qui est co-réactif avec GRa et situé en position terminale, latérale et/ou dans la chaîne, la totalité des molécules polymères présentant, en moyenne, chacune au moins un groupe GRa et un groupe GRb.

2. Composition selon la revendication 1, où le pigment I est une matière solide Ia choisie dans le groupe formé par une matière solide inorganique qui est choisie dans le groupe formé par les oxydes, les oxydes mixtes, les silicates, les sulfates, les carbonates, les phosphates, les nitrures, les amides, les imides et les carbures des éléments du Ier, IIème, IIIème ou IVème groupe principal de la Classification Périodique des Eléments ; un polymère qui est choisi dans le groupe formé par le polyéthylène, le polypropylène, le polystyrène, le polytétrafluoroéthylène, le poly(fluorure de vinylidène) ; les polyamides ; les polyimides ; et une dispersion de matière solide contenant un polymère d'un tel type ; et un mélange de deux ou de plusieurs de ceux-ci.

3. Composition selon la revendication 1, où le pigment I est un composé Ib qui est employé, en tant que matière constituant la cathode, dans des cellules électrochimiques et qui est choisi dans le groupe formé par LiCoO₂, LiNiO₂, LiNiₓCo_{y}O₂, LiNiₓCo_{y}Al_{z}O₂ avec 0<x,y,z≤1, LiₓMnO₂ (0<x≤1), LiₓMn₂O₄ (O<x≤2), Li ₓMoO₂ (0<x≤2), LiₓMnO₃ (0<x≤1), LiₓMnO₂ (0<x≤2), LiₓMn₂O₄ (0<x≤2), LiₓV₂O₄ (0<x≤2,5), LiₓV₂O₃ (0<x≤3,5), LiₓVO₂ (0<x≤1), LiₓWO₂ (0<x≤1), LiₓWO₃ (0<x≤1), LiₓTiO₂ (0<x≤1), LiₓTi₂O₄ (0<x≤2), LiₓRuO₂ (0<x≤1), LiₓFe₂O₃ (0<x≤2), LiₓFe₃O₄ (0<x≤2), LiₓCr₂O₃ (0<x≤3), LiₓCr₃O₄ (0<x≤3,8), LiₓV₃S₅ (0<x≤1,8), LiₓTa₂S₂ (0<x≤1), LiₓFeS (0<x≤1), LiₓFeS₂ (0<x≤1), LiₓNbS₂ (0<x≤2,4), LiₓMoS₂ (0<x≤3), LiₓTiS₂ (0<x≤2), LiₓZrS₂ (0<x≤2), LiₓNbSe₂ (0<x≤3), LiₓVSe₂ (0<x≤1), LiₓNiPS₂ (0<x≤1,5), LiₓFePS₂ (0<x≤1,5), LiNiₓB₁₋ₓO₂ (0 < x < 1), LiNiₓAl₁₋ₓO₂ (0 < x < 1), LiNiₓMg₁₋ₓO₂ (0 < x < 1), LiNiₓCo₁₋ₓVO₄ (1 ≥ x ≥ 0), LiNiₓCo_{y}Mn_{z}O₂ (x+y+z = 1), LiFeO₂, LiCrTiO₄, LiₐM_{b}L_{c}O_{d} (1,15 ≥ a > 0 ; 1,3 ≥ b+c ≥ 0,8 ; 2,5 ≥ d ≥ 1,7 ; M = Ni, Co, Mn ; L = Ti, Mn, Cu, Zn, un atome d'un métal alcalino-terreux), LiCuₓ^{II}Cu_{y}^{III}Mn_{(2-(x+y))}O₄ (2 > x+y ≥ 0), LiCrTiO₄, LiGaₓMn₂₋ₓO₄ (0,1≥ x ≥ 0), les poly(sulfures de carbone) de structure générale -[C(Sₓ)]ₙ-, V₂O₅, un mélange constitué de deux ou de plusieurs de ces composés, et un mélange constitué du composé Ib et de la matière solide Ia ; et où la composition contient en plus de la suie conductrice à raison de 0,1% à 20% en poids par rapport à la quantité totale des composants I à III.

4. Composition selon la revendication 1, ou le pigment I est un composé Ic qui est employé, en tant que matière constituant l'anode, dans des cellules électrochimiques et qui est choisi dans le groupe formé par le lithium, un alliage métallique contenant du lithium, la suie de carbone micronisée, le graphite naturel ou synthétique, la poussière de charbon graphité synthétiquement, une fibre de carbone, l'oxyde de titane, l'oxyde de zinc, l'oxyde d'étain, l'oxyde de molybdène, l'oxyde de tungstène, le carbonate de titane, le carbonate de molybdène, le carbonate de zinc, LiₓM_{y}SiO_{z} (1 > x ≥ 0,1 > y ≥ 0, z > 0), Sn₂BPO₄, les polymères conjugués, les composés métalliques du lithium LiₓM et un mélange constitué de deux ou de plusieurs de ceux-ci, et un mélange constitué du composé Ic et de la matière solide Ia ; et où la composition contient en plus de la suie conductrice à raison de jusqu'à 20% en poids par rapport à la quantité totale des composants I à III.

5. Composition selon l'une quelconque des revendications 1 à 4, où le polymère IIa est un polymère ou un copolymère d'un acrylate ou d'un méthacrylate et où il présente des groupes réactifs GRa contenant des motifs benzophénone et des groupes réactifs GRb contenant des motifs dihydrodicyclopentadiène.

6. Composition selon l'une quelconque des revendications 1 à 5, où l'on choisit le polymère IIb dans le groupe formé par un polymère ou un copolymère du chlorure de vinyle, de l'acrylonitrile, du fluorure de vinylidène ; un copolymère constitué du chlorure de vinyle et du chlorure de vinylidène, du chlorure de vinyle et de l'acrylonitrile, du fluorure de vinylidène et de l'hexafluoropropylène, du fluorure de vinylidène avec l'hexafluoropropylène ; un terpolymère constitué du fluorure de vinylidène et de l'hexafluoropropylène ainsi qu'un élément du groupe formé par le fluorure de vinyle, le tétrafluoroéthylène et le trifluoroéthylène.

7. Composition selon l'une quelconque des revendications 1 à 6, où le polymère IIa est un polymère selon la définition de la revendication 6, et où le polymère IIb est un copolymère constitué du fluorure de vinylidène et de l'hexafluoropropylène.

8. Corps composite comprenant au moins une première couche contenant une composition selon l'une quelconque des revendications 1 à 7, composition qui comprend un composé Ib ou un composé Ic, et au moins une deuxième couche contenant une composition selon l'une quelconque des revendications 1 à 7, composition qui comprend une matière solide Ia et qui est exempte des composés Ic et Ib.

9. Mise en oeuvre d'une composition selon l'une quelconque des revendications 1 à 7 ou d'un corps composé selon la revendication 8, pour la préparation d'un électrolyte fixe, d'un séparateur ou d'une électrode, dans un détecteur, dans une fenêtre électrochrome, dans un dispositif d'affichage, dans un condensateur ou dans une feuille à conductivité ionique.

10. Electrolyte fixe, séparateur, électrode, détecteur, fenêtre électrochrome, dispositif d'affichage, condensateur ou feuille à conductivité ionique qui contiennent chacun une composition selon l'une quelconque des revendications 1 à 7 ou un corps composite selon la revendication 8.

11. Cellule électrochimique comprenant un électrolyte fixe, un séparateur ou une électrode selon la revendication 10 ou bien une combinaison de deux ou de plusieurs de ceux-ci.

12. Mise en oeuvre d'un polymère IIa selon la définition dans une quelconque des revendications 1 et 5, en tant que système de réticulation dans un électrolyte fixe, dans un séparateur ou dans une électrode.
